# EUROPEAN PATENT SPECIFICATION

(11) **EP 4 272 413 B1**
(45) Date of publication and mention of the grant of the patent: **19.11.2025**
(21) Application number: 21848220.6
(22) Date of filing: 21.12.2021
(51) Int. Cl.: H04L 67/1034, H04L 69/16, H04L 9/40, H04L 67/1095, H04L 69/40

(54) **SYNCHRONIZING COMMUNICATION CHANNEL STATE INFORMATION FOR HIGH FLOW AVAILABILITY**
SYNCHRONISIERUNG VON KOMMUNIKATIONSKANALSTATUSINFORMATIONEN FÜR HOHE FLUSSVERFÜGBARKEIT
SYNCHRONISATION D'INFORMATIONS D'ÉTAT DE CANAL DE COMMUNICATION POUR UNE DISPONIBILITÉ HAUT DÉBIT

(30) Priority: 30.12.2020 US 202063132036 P; 20.12.2021 US 202117556540
(43) Date of publication of application: 08.11.2023
(73) Proprietor: Oracle International Corporation, Redwood Shores, CA 94065 (US)
(72) Inventor: KEANE, John Eric, Redwood Shores, California 94065 (US); KING, Myron Decker, Redwood Shores, California 94065 (US); KREGER-STICKLES, Lucas Michael, Redwood Shores, California 94065 (US)
(74) Representative: Gill Jennings & Every LLP
(86) International application number: PCT/US2021/064612
(87) International publication number: WO 2022/146787

(56) References cited:
- US-A1- 2006 198 296
- US-A1- 2006 198 296
- US-A1- 2020 287 781
- US-A1- 2020 287 781

## Description

### CROSS-REFERENCES TO RELATED APPLICATIONS

This application claims the benefit and priority under 35 U.S.C. 119(e) of U.S. Provisional Application No. 63/132,036, filed on December 30, 2020 and U.S. Non-Provisional Application No. 17/556,540, filed on December 20, 2021.

### BACKGROUND

The demand for cloud-based services continues to increase rapidly. The term cloud service is generally used to refer to a service that is made available to users or customers on demand (e.g., via a subscription model) using systems and infrastructure (cloud infrastructure) provided by a cloud services provider. Typically, the servers and systems that make up the cloud service provider's infrastructure are separate from the customer's own on-premise servers and systems. Customers can thus avail themselves of cloud services provided by a cloud service provider without having to purchase separate hardware and software resources for the services. There are various different types of cloud services including Software-as-a-Service (SaaS), Platform-as-a-Service (PaaS), Infrastructure-as-a-Service (IaaS), and others.

In an IaaS model, the cloud services provider provides infrastructure resources (e.g., compute resource, memory resources, networking resources, such as servers, storage devices, etc.) that can be used by customers to build their own resources and virtual networks. The infrastructure provided by the IaaS cloud service provider comprising interconnected high-performance computer, memory, and network resources or components forms a physical network (also referred to as a substrate network or underlay network). The physical network provides the underlying basis for creating customers' virtual networks (also referred to as overlay networks) on top of the physical network.

The cloud service provider generally provides a wide range of applications, services, and APIs that enable customers (e.g., enterprises) to efficiently build these virtual networks, and deploy and manage various virtual workloads (e.g., virtual machines, containers, applications) in these virtual networks in a highly available distributed environment. Customers can generally manage their cloud-based workloads in the same way they manage their on-premises workloads and get all benefits of the high-performance computing and network capabilities with the same control, isolation, security, and predictable performance as their on-premises network.

Customers generally have one or more customer on-premises networks and one or more virtual networks deployed in the cloud using infrastructure provided by the cloud service provider. Various different communication mechanisms may be provided that enable a customer's on- premise network to communicate with the customer's virtual cloud network. In order to set up such communications, devices or equipment in the customer's on-premise network need to be configured to be able to participate in these communications. For example, the customer premises equipment (CPE) that is to be one end point of the communication channel between the customer's on-premise network and a host machine that is another endpoint within customer's virtual network hosted cloud service infrastructure (CSPI) needs to be properly configured. An Internet Protocol Security (IPsec) tunnel may be configured to securely process traffic between CPE and CSPI endpoints.

Customers expect these cloud services to be highly available, with minimal downtime, even if there are problems in the underlying infrastructure (e.g., a host machine goes down, there is a cabling problem, etc.). To achieve this, cloud service providers build redundancies into their infrastructure. For example, for a host machine that is processing network packets, one or more backup systems (backup host machines) are designated such that if the host machine has any problem that causes the host machine to not be able to process the packets, one of the backup host machines takes over processing of the packets such that the customer sees minimal, if any, disruption. Typically when a host machine goes down, the communication channel associated with the host machine also goes down, and all the traffic in both directions is dropped.

Accordingly, if an endpoint or host machine within a customer's virtual network goes down, it may take a long time (e.g., seconds to minutes) for a backup system to negotiate a new communication channel. If the customer's virtual cloud network is equipped with a backup communication channel to process packets upon failure of the endpoint, setting up the backup channel and dynamically routing packets during failover to the backup channel is quite complex and time consuming solution to build, especially when the solution has to scale across the entire distributed environment.

US 2020/287781 A1 discloses a a network connection and termination system that provides managed network connection functionality to clients. In some examples, a network connection and termination system can enable service or application developers to un-bind a live network session from a specific backend server and migrate the live network session to a different backend server, without interrupting the network session and without network client cooperation

US 2006/198296 A1 discloses a method comprising receiving information defining a first connection between a first network device and a computer; establishing a replication channel between the first network device and a backup device; storing backup control information at the backup device; communicating a message flow between the first network device and the computer on the first transport connection; in response to unavailability of the first network device, communicating messages on the replication channel that cause (a) establishing a second connection between the backup device and the computer; (b) continuing communication of the message flow between the backup device and the computer based on the backup control information.

### SUMMARY

The present disclosure relates generally to techniques for improving availability of cloud services, and more particularly to techniques for maintaining and replicating communication channel-related state information across multiple host machines. Various embodiments are described herein, including methods, systems, non-transitory computer-readable storage media storing programs, code, or instructions executable by one or more processors, and the like.

The invention is set out in the appended set of claims.

Various embodiments are described herein, including methods, systems, non-transitory computer-readable storage media storing programs, code, or instructions executable by one or more processors, and the like. These illustrative embodiments are mentioned not to limit or define the disclosure, but to provide examples to aid understanding thereof. Additional embodiments are discussed in the Detailed Description, and further description is provided there.

### BRIEF DESCRIPTION OF THE DRAWINGS

Features, embodiments, and advantages of the present disclosure are better understood when the following Detailed Description is read with reference to the accompanying drawings.
Fig. 1 is a high level diagram of a distributed environment showing a virtual or overlay cloud network hosted by a cloud service provider infrastructure according to certain embodiments.
FIG. 2 depicts a simplified architectural diagram of the physical components in the physical network within CSPI according to certain embodiments.
FIG. 3 shows an example arrangement within CSPI where a host machine is connected to multiple network virtualization devices (NVDs) according to certain embodiments.
FIG. 4 depicts connectivity between a host machine and an NVD for providing I/O virtualization for supporting multitenancy according to certain embodiments.
FIG. 5 depicts a simplified block diagram of a physical network provided by a CSPI according to certain embodiments.
FIG. 6 depicts a simplified block diagram of a distributed environment incorporating an exemplary embodiment for performing communication channel-related state information replication, according to certain embodiments.
FIG. 7A depicts an example of block diagram showing plurality of host machines within a replication chain, according to certain embodiments.
FIG. 7B depicts another example block diagram showing plurality of host machines within a replication chain, according to certain embodiments.
FIG. 8 depicts a simplified flowchart depicting a method for replicating communication channel-related state information to a backup host machine, according to certain embodiments.
FIG. 9 depicts a simplified flowchart depicting replication of communication channel-related state information by a replication channel, according to certain embodiments.
FIG. 10 depicts a simplified flowchart depicting detailed processing performed for replicating communication channel-related state information by a primary host machine, according to certain embodiments.
FIG. 11 illustrates a simplified flowchart depicting steps performed to handle packet processing during a failover of primary host machine, according to certain embodiments.
FIG. 12 is a block diagram illustrating one pattern for implementing a cloud infrastructure as a service system, according to at least one embodiment.
FIG. 13 is a block diagram illustrating another pattern for implementing a cloud infrastructure as a service system, according to at least one embodiment.
FIG. 14 is a block diagram illustrating another pattern for implementing a cloud infrastructure as a service system, according to at least one embodiment.
FIG. 15 is a block diagram illustrating another pattern for implementing a cloud infrastructure as a service system, according to at least one embodiment.
FIG. 16 is a block diagram illustrating an example computer system, according to at least one embodiment.

### DETAILED DESCRIPTION

In the following description, for the purposes of explanation, specific details are set forth in order to provide a thorough understanding of certain embodiments. However, it will be apparent that various embodiments may be practiced without these specific details. The figures and description are not intended to be restrictive. The word "exemplary" is used herein to mean "serving as an example, instance, or illustration." Any embodiment or design described herein as "exemplary" is not necessarily to be construed as preferred or advantageous over other embodiments or designs.

The present disclosure describes techniques for synchronizing state information for a communication channel within a cluster of host machines hosted by a cloud service provider infrastructure (CSPI) for high flow availability. More particularly, techniques are described for synchronizing state information for the communication channel processing traffic between an endpoint in a customer's on-premise network and an endpoint within a virtual network hosted on the cloud service provider infrastructure (CSPI).

Customers subscribe to one or more cloud services provided by Cloud Service Provider (CSP) using CSPI. A communication channel (e.g., IPsec Tunnel) may be configured to securely transmit packets between the customer premises equipment (CPE) that is an endpoint of communication within the customer's on-premise network and a host machine that is a primary endpoint within a customer's virtual network for the cloud service infrastructure (CSPI). The two endpoints negotiate with each other to set up a communication channel. Specifically, between the two endpoints, a series of messages about encryption and authentication may be sent back and forth to negotiate an agreement involving encryption and authentication related parameters to be used for communication. Upon the negotiations, a security association (SA) between two endpoints is determined where the SA specifies security properties that are agreed upon and recognized by the communicating endpoints. A single SA may protect data in one direction. The SA provides detail to both endpoints on how to encrypt and decrypt the packets for communication between the two endpoints.

Typically, if an endpoint receiving the traffic is down for some reason (e.g., failover event or maintenance activity), the communication channel or tunnel also goes down and all the traffic in both directions is dropped. When an endpoint within cloud infrastructure (CSPI) goes down, the infrastructure may provide a backup system to take over processing of traffic that was setup between endpoints of CPE and CSPI. However, the backup system may need to negotiate a new tunnel with the endpoint of CPE to send and receive traffic on the backup system which can be complex and time consuming.

Setting up a new tunnel in the event of failure may require a set of negotiations and configurations between endpoints which could take a few minutes. During the process of setting up backup tunnels, applications using certain types of connections such as TCP connections may time out which may be unacceptable to customers. For example, if an online shopper is shopping on a website and the website's database is on the cloud network provided by a service provider, the shopping transaction may fail or the shopping cart may time out if a failure is detected on an endpoint within the cloud network managing the database. This behavior would be unacceptable to customers of cloud service. Certain service providers may provide a backup tunnel to process traffic between CPE endpoint and a backup system in case of a failure within primary endpoint hosted on CSPI. However, processing traffic using a backup tunnel to backup systems may also require setting up a backup tunnel and complex dynamic routing of traffic to the backup tunnel every time the primary endpoint is down. These solutions are complex and time-consuming to implement for the cloud computing environment where systems within CSPI are handling a large number of customers communicating using layer 3 protocols.

The present disclosure discusses a method for processing of network traffic using the same communication channel to the backup endpoint that was used to process packets between endpoint of CPE and primary endpoint within CSPI. The method provides a highly available tunnel that allows traffic to be processed to different endpoints while avoiding complexity of having two tunnels and risk of losing connection while negotiating a new connection for a backup tunnel.

The term cloud service is generally used to refer to a service that is made available by a cloud services provider (CSP) to users or customers on demand (e.g., via a subscription model) using systems and infrastructure (cloud infrastructure) provided by the CSP. Typically, the servers and systems that make up the CSP's infrastructure are separate from the customer's own on-premise servers and systems. Customers can thus avail themselves of cloud services provided by the CSP without having to purchase separate hardware and software resources for the services. Cloud services are designed to provide a subscribing customer easy, scalable access to applications and computing resources without the customer having to invest in procuring the infrastructure that is used for providing the services.

There are several cloud service providers that offer various types of cloud services. There are various different types or models of cloud services including Software-as-a-Service (SaaS), Platform-as-a-Service (PaaS), Infrastructure-as-a-Service (IaaS), and others.

A customer can subscribe to one or more cloud services provided by a CSP. The customer can be any entity such as an individual, an organization, an enterprise, and the like. When a customer subscribes to or registers for a service provided by a CSP, a tenancy or an account is created for that customer. The customer can then, via this account, access the subscribed-to one or more cloud resources associated with the account.

As noted above, infrastructure as a service (IaaS) is one particular type of cloud computing service. In an IaaS model, the CSP provides infrastructure (referred to as cloud services provider infrastructure or CSPI) that can be used by customers to build their own customizable networks and deploy customer resources. The customer's resources and networks are thus hosted in a distributed environment by infrastructure provided by a CSP. This is different from traditional computing, where the customer's resources and networks are hosted by infrastructure provided by the customer.

The CSPI may comprise interconnected high-performance compute resources including various host machines, memory resources, and network resources that form a physical network, which is also referred to as a substrate network or an underlay network. The resources in CSPI may be spread across one or more data centers that may be geographically spread across one or more geographical regions. Virtualization software may be executed by these physical resources to provide a virtualized distributed environment. The virtualization creates an overlay network (also known as a software-based network, a software-defined network, or a virtual network) over the physical network. The CSPI physical network provides the underlying basis for creating one or more overlay or virtual networks on top of the physical network. The virtual or overlay networks can include one or more virtual cloud networks (VCNs). The virtual networks are implemented using software virtualization technologies (e.g., hypervisors, functions performed by network virtualization devices (NVDs) (e.g., smartNICs), top-of-rack (TOR) switches, smart TORs that implement one or more functions performed by an NVD, and other mechanisms) to create layers of network abstraction that can be run on top of the physical network. Virtual networks can take on many forms, including peer-to-peer networks, IP networks, and others. Virtual networks are typically either Layer-3 IP networks or Layer-2 VLANs. This method of virtual or overlay networking is often referred to as virtual or overlay Layer-3 networking. Examples of protocols developed for virtual networks include IP-in-IP (or Generic Routing Encapsulation (GRE)), Virtual Extensible LAN (VXLAN - IETF RFC 7348), Virtual Private Networks (VPNs) (e.g., MPLS Layer-3 Virtual Private Networks (RFC 4364)), VMware's NSX, GENEVE (Generic Network Virtualization Encapsulation), and others.

For IaaS, the infrastructure (CSPI) provided by a CSP can be configured to provide virtualized computing resources over a public network (e.g., the Internet). In an IaaS model, a cloud computing services provider can host the infrastructure components (e.g., servers, storage devices, network nodes (e.g., hardware), deployment software, platform virtualization (e.g., a hypervisor layer), or the like). In some cases, an IaaS provider may also supply a variety of services to accompany those infrastructure components (e.g., billing, monitoring, logging, security, load balancing and clustering, etc.). Thus, as these services may be policy-driven, IaaS users may be able to implement policies to drive load balancing to maintain application availability and performance. CSPI provides infrastructure and a set of complementary cloud services that enable customers to build and run a wide range of applications and services in a highly available hosted distributed environment. CSPI offers high-performance compute resources and capabilities and storage capacity in a flexible virtual network that is securely accessible from various networked locations such as from a customer's on-premises network. When a customer subscribes to or registers for an IaaS service provided by a CSP, the tenancy created for that customer is a secure and isolated partition within the CSPI where the customer can create, organize, and administer their cloud resources.

Customers can build their own virtual networks using compute, memory, and networking resources provided by CSPI. One or more customer resources or workloads, such as compute instances, can be deployed on these virtual networks. For example, a customer can use resources provided by CSPI to build one or multiple customizable and private virtual network(s) referred to as virtual cloud networks (VCNs). A customer can deploy one or more customer resources, such as compute instances, on a customer VCN. Compute instances can take the form of virtual machines, bare metal instances, and the like. The CSPI thus provides infrastructure and a set of complementary cloud services that enable customers to build and run a wide range of applications and services in a highly available virtual hosted environment. The customer does not manage or control the underlying physical resources provided by CSPI but has control over operating systems, storage, and deployed applications; and possibly limited control of select networking components (e.g., firewalls).

The CSP may provide a console that enables customers and network administrators to configure, access, and manage resources deployed in the cloud using CSPI resources. In certain embodiments, the console provides a web-based user interface that can be used to access and manage CSPI. In some implementations, the console is a web-based application provided by the CSP.

CSPI may support single-tenancy or multi-tenancy architectures. In a single tenancy architecture, a software (e.g., an application, a database) or a hardware component (e.g., a host machine or a server) serves a single customer or tenant. In a multi-tenancy architecture, a software or a hardware component serves multiple customers or tenants. Thus, in a multi-tenancy architecture, CSPI resources are shared between multiple customers or tenants. In a multi-tenancy situation, precautions are taken and safeguards put in place within CSPI to ensure that each tenant's data is isolated and remains invisible to other tenants.

In a physical network, a network endpoint ("endpoint") refers to a computing device or system that is connected to a physical network and communicates back and forth with the network to which it is connected. A network endpoint in the physical network may be connected to a Local Area Network (LAN), a Wide Area Network (WAN), or other type of physical network. Examples of traditional endpoints in a physical network include modems, hubs, bridges, switches, routers, and other networking devices, physical computers (or host machines), and the like. Each physical device in the physical network has a fixed network address that can be used to communicate with the device. This fixed network address can be a Layer-2 address (e.g., a MAC address), a fixed Layer-3 address (e.g., an IP address), and the like. In a virtualized environment or in a virtual network, the endpoints can include various virtual endpoints such as virtual machines that are hosted by components of the physical network (e.g., hosted by physical host machines). These endpoints in the virtual network are addressed by overlay addresses such as overlay Layer-2 addresses (e.g., overlay MAC addresses) and overlay Layer-3 addresses (e.g., overlay IP addresses). Network overlays enable flexibility by allowing network managers to move around the overlay addresses associated with network endpoints using software management (e.g., via software implementing a control plane for the virtual network). Accordingly, unlike in a physical network, in a virtual network, an overlay address (e.g., an overlay IP address) can be moved from one endpoint to another using network management software. Since the virtual network is built on top of a physical network, communications between components in the virtual network involves both the virtual network and the underlying physical network. In order to facilitate such communications, the components of CSPI are configured to learn and store mappings that map overlay addresses in the virtual network to actual physical addresses in the substrate network, and vice versa. These mappings are then used to facilitate the communications. Customer traffic is encapsulated to facilitate routing in the virtual network.

Accordingly, physical addresses (e.g., physical IP addresses) are associated with components in physical networks and overlay addresses (e.g., overlay IP addresses) are associated with entities in virtual networks. Both the physical IP addresses and overlay IP addresses are types of real IP addresses. These are separate from virtual IP addresses, where a virtual IP address maps to multiple real IP addresses. A virtual IP address provides a 1-to-many mapping between the virtual IP address and multiple real IP addresses.

The cloud infrastructure or CSPI is physically hosted in one or more data centers in one or more regions around the world. The CSPI may include components in the physical or substrate network and virtualized components (e.g., virtual networks, compute instances, virtual machines, etc.) that are in a virtual network built on top of the physical network components. In certain embodiments, the CSPI is organized and hosted in realms, regions and availability domains. A region is typically a localized geographic area that contains one or more data centers. Regions are generally independent of each other and can be separated by vast distances, for example, across countries or even continents. For example, a first region may be in Australia, another one in Japan, yet another one in India, and the like. CSPI resources are divided among regions such that each region has its own independent subset of CSPI resources. Each region may provide a set of core infrastructure services and resources, such as, compute resources (e.g., bare metal servers, virtual machine, containers and related infrastructure, etc.); storage resources (e.g., block volume storage, file storage, object storage, archive storage); networking resources (e.g., virtual cloud networks (VCNs), load balancing resources, connections to on-premise networks), database resources; edge networking resources (e.g., DNS); and access management and monitoring resources, and others. Each region generally has multiple paths connecting it to other regions in the realm.

Generally, an application is deployed in a region (i.e., deployed on infrastructure associated with that region) where it is most heavily used, because using nearby resources is faster than using distant resources. Applications can also be deployed in different regions for various reasons, such as redundancy to mitigate the risk of region-wide events such as large weather systems or earthquakes, to meet varying requirements for legal jurisdictions, tax domains, and other business or social criteria, and the like.

The data centers within a region can be further organized and subdivided into availability domains (ADs). An availability domain may correspond to one or more data centers located within a region. A region can be composed of one or more availability domains. In such a distributed environment, CSPI resources are either region-specific, such as a virtual cloud network (VCN), or availability domain-specific, such as a compute instance.

ADs within a region are isolated from each other, fault tolerant, and are configured such that they are very unlikely to fail simultaneously. This is achieved by the ADs not sharing critical infrastructure resources such as networking, physical cables, cable paths, cable entry points, etc., such that a failure at one AD within a region is unlikely to impact the availability of the other ADs within the same region. The ADs within the same region may be connected to each other by a low latency, high bandwidth network, which makes it possible to provide high-availability connectivity to other networks (e.g., the Internet, customers' on-premise networks, etc.) and to build replicated systems in multiple ADs for both high-availability and disaster recovery. Cloud services use multiple ADs to ensure high availability and to protect against resource failure. As the infrastructure provided by the IaaS provider grows, more regions and ADs may be added with additional capacity. Traffic between availability domains is usually encrypted.

In certain embodiments, regions are grouped into realms. A realm is a logical collection of regions. Realms are isolated from each other and do not share any data. Regions in the same realm may communicate with each other, but regions in different realms cannot. A customer's tenancy or account with the CSP exists in a single realm and can be spread across one or more regions that belong to that realm. Typically, when a customer subscribes to an IaaS service, a tenancy or account is created for that customer in the customer-specified region (referred to as the "home" region) within a realm. A customer can extend the customer's tenancy across one or more other regions within the realm. A customer cannot access regions that are not in the realm where the customer's tenancy exists.

An IaaS provider can provide multiple realms, each realm catered to a particular set of customers or users. For example, a commercial realm may be provided for commercial customers. As another example, a realm may be provided for a specific country for customers within that country. As yet another example, a government realm may be provided for a government, and the like. For example, the government realm may be catered for a specific government and may have a heightened level of security than a commercial realm. For example, Oracle Cloud Infrastructure (OCI) currently offers a realm for commercial regions and two realms (e.g., FedRAMP authorized and IL5 authorized) for government cloud regions.

In certain embodiments, an AD can be subdivided into one or more fault domains. A fault domain is a grouping of infrastructure resources within an AD to provide anti-affinity. Fault domains allow for the distribution of compute instances such that the instances are not on the same physical hardware within a single AD. This is known as anti-affinity. A fault domain refers to a set of hardware components (computers, switches, and more) that share a single point of failure. A compute pool is logically divided up into fault domains. Due to this, a hardware failure or compute hardware maintenance event that affects one fault domain does not affect instances in other fault domains. Depending on the embodiment, the number of fault domains for each AD may vary. For instance, in certain embodiments each AD contains three fault domains. A fault domain acts as a logical data center within an AD.

When a customer subscribes to an IaaS service, resources from CSPI are provisioned for the customer and associated with the customer's tenancy. The customer can use these provisioned resources to build private networks and deploy resources on these networks. The customer networks that are hosted in the cloud by the CSPI are referred to as virtual cloud networks (VCNs). A customer can set up one or more virtual cloud networks (VCNs) using CSPI resources allocated for the customer. A VCN is a virtual or software defined private network. The customer resources that are deployed in the customer's VCN can include compute instances (e.g., virtual machines, bare-metal instances) and other resources. These compute instances may represent various customer workloads such as applications, load balancers, databases, and the like. A compute instance deployed on a VCN can communicate with public accessible endpoints ("public endpoints") over a public network such as the Internet, with other instances in the same VCN or other VCNs (e.g., the customer's other VCNs, or VCNs not belonging to the customer), with the customer's on-premise data centers or networks, and with service endpoints, and other types of endpoints.

The CSP may provide various services using the CSPI. In some instances, customers of CSPI may themselves act like service providers and provide services using CSPI resources. A service provider may expose a service endpoint, which is characterized by identification information (e.g., an IP Address, a DNS name and port). A customer's resource (e.g., a compute instance) can consume a particular service by accessing a service endpoint exposed by the service for that particular service. These service endpoints are generally endpoints that are publicly accessible by users using public IP addresses associated with the endpoints via a public communication network such as the Internet. Network endpoints that are publicly accessible are also sometimes referred to as public endpoints.

In certain embodiments, a service provider may expose a service via an endpoint (sometimes referred to as a service endpoint) for the service. Customers of the service can then use this service endpoint to access the service. In certain implementations, a service endpoint provided for a service can be accessed by multiple customers that intend to consume that service. In other implementations, a dedicated service endpoint may be provided for a customer such that only that customer can access the service using that dedicated service endpoint.

**In** certain embodiments, when a VCN is created, it is associated with a private overlay Classless Inter-Domain Routing (CIDR) address space, which is a range of private overlay IP addresses that are assigned to the VCN (e.g., 10.0/16). A VCN includes associated subnets, route tables, and gateways. A VCN resides within a single region but can span one or more or all of the region's availability domains. A gateway is a virtual interface that is configured for a VCN and enables communication of traffic to and from the VCN to one or more endpoints outside the VCN. One or more different types of gateways may be configured for a VCN to enable communication to and from different types of endpoints.

A VCN can be subdivided into one or more sub-networks such as one or more subnets. A subnet is thus a unit of configuration or a subdivision that can be created within a VCN. A VCN can have one or multiple subnets. Each subnet within a VCN is associated with a contiguous range of overlay IP addresses (e.g., 10.0.0.0/24 and 10.0.1.0/24) that do not overlap with other subnets in that VCN and which represent an address space subset within the address space of the VCN.

Each compute instance is associated with a virtual network interface card (VNIC) that enables the compute instance to participate in a subnet of a VCN. A VNIC is a logical representation of physical Network Interface Card (NIC). In general, a VNIC is an interface between an entity (e.g., a compute instance, a service) and a virtual network. A VNIC exists in a subnet, has one or more associated IP addresses, and associated security rules or policies. A VNIC is equivalent to a Layer-2 port on a switch. A VNIC is attached to a compute instance and to a subnet within a VCN. A VNIC associated with a compute instance enables the compute instance to be a part of a subnet of a VCN and enables the compute instance to communicate (e.g., send and receive packets) with endpoints that are on the same subnet as the compute instance, with endpoints in different subnets in the VCN, or with endpoints outside the VCN. The VNIC associated with a compute instance thus determines how the compute instance connects with endpoints inside and outside the VCN. A VNIC for a compute instance is created and associated with that compute instance when the compute instance is created and added to a subnet within a VCN. For a subnet comprising a set of compute instances, the subnet contains the VNICs corresponding to the set of compute instances, each VNIC attached to a compute instance within the set of computer instances.

Each compute instance is assigned a private overlay IP address via the VNIC associated with the compute instance. This private overlay IP address is assigned to the VNIC that is associated with the compute instance when the compute instance is created and used for routing traffic to and from the compute instance. All VNICs in a given subnet use the same route table, security lists, and DHCP options. As described above, each subnet within a VCN is associated with a contiguous range of overlay IP addresses (e.g., 10.0.0.0/24 and 10.0.1.0/24) that do not overlap with other subnets in that VCN and which represent an address space subset within the address space of the VCN. For a VNIC on a particular subnet of a VCN, the private overlay IP address that is assigned to the VNIC is an address from the contiguous range of overlay IP addresses allocated for the subnet.

In certain embodiments, a compute instance may optionally be assigned additional overlay IP addresses in addition to the private overlay IP address, such as, for example, one or more public IP addresses if in a public subnet. These multiple addresses are assigned either on the same VNIC or over multiple VNICs that are associated with the compute instance. Each instance however has a primary VNIC that is created during instance launch and is associated with the overlay private IP address assigned to the instance-this primary VNIC cannot be removed. Additional VNICs, referred to as secondary VNICs, can be added to an existing instance in the same availability domain as the primary VNIC. All the VNICs are in the same availability domain as the instance. A secondary VNIC can be in a subnet in the same VCN as the primary VNIC, or in a different subnet that is either in the same VCN or a different one.

A compute instance may optionally be assigned a public IP address if it is in a public subnet. A subnet can be designated as either a public subnet or a private subnet at the time the subnet is created. A private subnet means that the resources (e.g., compute instances) and associated VNICs in the subnet cannot have public overlay IP addresses. A public subnet means that the resources and associated VNICs in the subnet can have public IP addresses. A customer can designate a subnet to exist either in a single availability domain or across multiple availability domains in a region or realm.

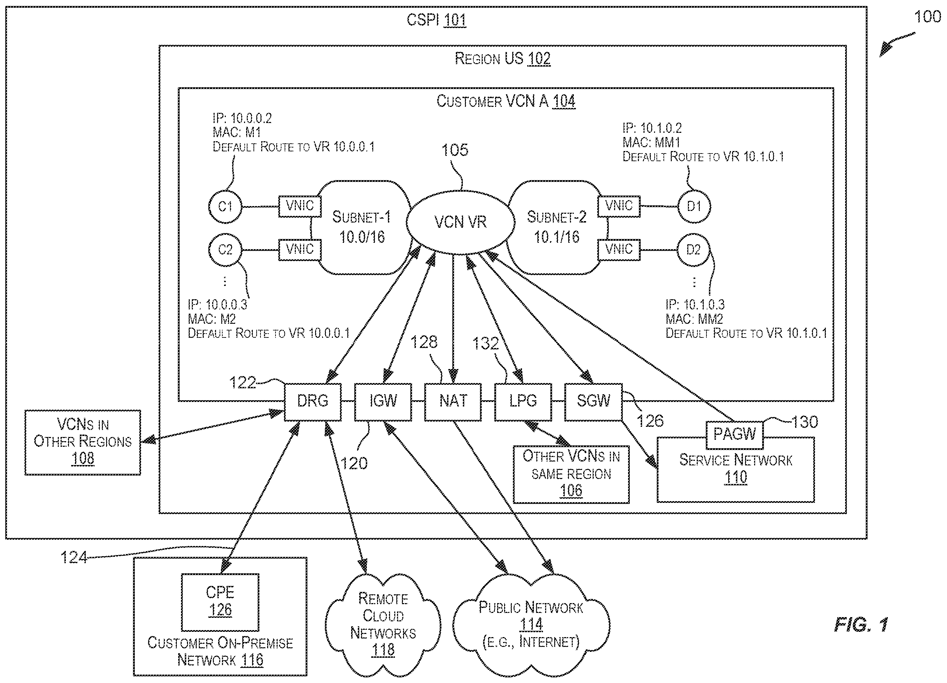

As described above, a VCN may be subdivided into one or more subnets. In certain embodiments, a Virtual Router (VR) configured for the VCN (referred to as the VCN VR or just VR) enables communications between the subnets of the VCN. For a subnet within a VCN, the VR represents a logical gateway for that subnet that enables the subnet (i.e., the compute instances on that subnet) to communicate with endpoints on other subnets within the VCN, and with other endpoints outside the VCN. The VCN VR is a logical entity that is configured to route traffic between VNICs in the VCN and virtual gateways ("gateways") associated with the VCN. Gateways are further described below with respect to FIG. 1. A VCN VR is a Layer-3/IP Layer concept. In one embodiment, there is one VCN VR for a VCN where the VCN VR has potentially an unlimited number of ports addressed by IP addresses, with one port for each subnet of the VCN. In this manner, the VCN VR has a different IP address for each subnet in the VCN that the VCN VR is attached to. The VR is also connected to the various gateways configured for a VCN. In certain embodiments, a particular overlay IP address from the overlay IP address range for a subnet is reserved for a port of the VCN VR for that subnet. For example, consider a VCN having two subnets with associated address ranges 10.0/16 and 10.1/16, respectively. For the first subnet within the VCN with address range 10.0/16, an address from this range is reserved for a port of the VCN VR for that subnet. In some instances, the first IP address from the range may be reserved for the VCN VR. For example, for the subnet with overlay IP address range 10.0/16, IP address 10.0.0.1 may be reserved for a port of the VCN VR for that subnet. For the second subnet within the same VCN with address range 10.1/16, the VCN VR may have a port for that second subnet with IP address 10.1.0.1. The VCN VR has a different IP address for each of the subnets in the VCN.

In some other embodiments, each subnet within a VCN may have its own associated VR that is addressable by the subnet using a reserved or default IP address associated with the VR. The reserved or default IP address may, for example, be the first IP address from the range of IP addresses associated with that subnet. The VNICs in the subnet can communicate (e.g., send and receive packets) with the VR associated with the subnet using this default or reserved IP address. In such an embodiment, the VR is the ingress/egress point for that subnet. The VR associated with a subnet within the VCN can communicate with other VRs associated with other subnets within the VCN. The VRs can also communicate with gateways associated with the VCN. The VR function for a subnet is running on or executed by one or more NVDs executing VNICs functionality for VNICs in the subnet.

Route tables, security rules, and DHCP options may be configured for a VCN. Route tables are virtual route tables for the VCN and include rules to route traffic from subnets within the VCN to destinations outside the VCN by way of gateways or specially configured instances. A VCN's route tables can be customized to control how packets are forwarded/routed to and from the VCN. DHCP options refers to configuration information that is automatically provided to the instances when they boot up.

Security rules configured for a VCN represent overlay firewall rules for the VCN. The security rules can include ingress and egress rules, and specify the types of traffic (e.g., based upon protocol and port) that is allowed in and out of the instances within the VCN. The customer can choose whether a given rule is stateful or stateless. For instance, the customer can allow incoming SSH traffic from anywhere to a set of instances by setting up a stateful ingress rule with source CIDR 0.0.0.0/0, and destination TCP port 22. Security rules can be implemented using network security groups or security lists. A network security group consists of a set of security rules that apply only to the resources in that group. A security list, on the other hand, includes rules that apply to all the resources in any subnet that uses the security list. A VCN may be provided with a default security list with default security rules. DHCP options configured for a VCN provide configuration information that is automatically provided to the instances in the VCN when the instances boot up.

In certain embodiments, the configuration information for a VCN is determined and stored by a VCN Control Plane. The configuration information for a VCN may include, for example, information about: the address range associated with the VCN, subnets within the VCN and associated information, one or more VRs associated with the VCN, compute instances in the VCN and associated VNICs, NVDs executing the various virtualization network functions (e.g., VNICs, VRs, gateways) associated with the VCN, state information for the VCN, and other VCN-related information. In certain embodiments, a VCN Distribution Service publishes the configuration information stored by the VCN Control Plane, or portions thereof, to the NVDs. The distributed information may be used to update information (e.g., forwarding tables, routing tables, etc.) stored and used by the NVDs to forward packets to and from the compute instances in the VCN.

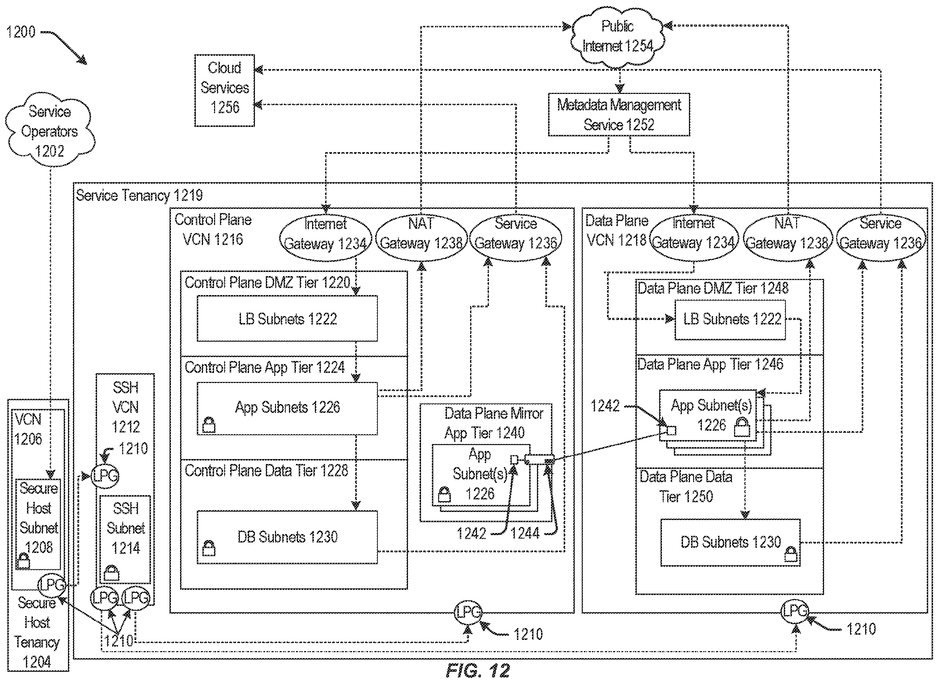

In certain embodiments, the creation of VCNs and subnets are handled by a VCN Control Plane (CP) and the launching of compute instances is handled by a Compute Control Plane. The Compute Control Plane is responsible for allocating the physical resources for the compute instance and then calls the VCN Control Plane to create and attach VNICs to the compute instance. The VCN CP also sends VCN data mappings to the VCN data plane that is configured to perform packet forwarding and routing functions. In certain embodiments, the VCN CP provides a distribution service that is responsible for providing updates to the VCN data plane. Examples of a VCN Control Plane are also depicted in FIGs. 12, 13, 14, and 15 (see references 1216, 1316, 1416, and 1516) and described below.

A customer may create one or more VCNs using resources hosted by CSPI. A compute instance deployed on a customer VCN may communicate with different endpoints. These endpoints can include endpoints that are hosted by CSPI and endpoints outside CSPI.

Various different architectures for implementing cloud-based service using CSPI are depicted in FIGs. 1, 2, 3, 4, 5, 12, 13, 14, and 15 are described below. FIG. 1 is a high level diagram of a distributed environment 100 showing an overlay or customer VCN hosted by CSPI according to certain embodiments. The distributed environment depicted in FIG. 1 includes multiple components in the overlay network. Distributed environment 100 depicted in FIG. 1 is merely an example and is not intended to unduly limit the scope of claimed embodiments. Many variations, alternatives, and modifications are possible. For example, in some implementations, the distributed environment depicted in FIG. 1 may have more or fewer systems or components than those shown in FIG. 1, may combine two or more systems, or may have a different configuration or arrangement of systems.

As shown in the example depicted in FIG. 1, distributed environment 100 comprises CSPI 101 that provides services and resources that customers can subscribe to and use to build their virtual cloud networks (VCNs). In certain embodiments, CSPI 101 offers IaaS services to subscribing customers. The data centers within CSPI 101 may be organized into one or more regions. One example region "Region US" 102 is shown in FIG. 1. A customer has configured a customer VCN 104 for region 102. The customer may deploy various compute instances on VCN 104, where the compute instances may include virtual machines or bare metal instances. Examples of instances include applications, database, load balancers, and the like.

In the embodiment depicted in FIG. 1, customer VCN 104 comprises two subnets, namely, "Subnet-1" and "Subnet-2", each subnet with its own CIDR IP address range. In FIG. 1, the overlay IP address range for Subnet-1 is 10.0/16 and the address range for Subnet-2 is 10.1/16. A VCN Virtual Router 105 represents a logical gateway for the VCN that enables communications between subnets of the VCN 104, and with other endpoints outside the VCN. VCN VR 105 is configured to route traffic between VNICs in VCN 104 and gateways associated with VCN 104. VCN VR 105 provides a port for each subnet of VCN 104. For example, VR 105 may provide a port with IP address 10.0.0.1 for Subnet-1 and a port with IP address 10.1.0.1 for Subnet-2.

Multiple compute instances may be deployed on each subnet, where the compute instances can be virtual machine instances, and/or bare metal instances. The compute instances in a subnet may be hosted by one or more host machines within CSPI 101. A compute instance participates in a subnet via a VNIC associated with the compute instance. For example, as shown in FIG. 1, a compute instance C1 is part of Subnet-1 via a VNIC associated with the compute instance. Likewise, compute instance C2 is part of Subnet-1 via a VNIC associated with C2. In a similar manner, multiple compute instances, which may be virtual machine instances or bare metal instances, may be part of Subnet-1. Via its associated VNIC, each compute instance is assigned a private overlay IP address and a MAC address. For example, in FIG. 1, compute instance C1 has an overlay IP address of 10.0.0.2 and a MAC address of M1, while compute instance C2 has a private overlay IP address of 10.0.0.3 and a MAC address of M2. Each compute instance in Subnet-1, including compute instances C1 and C2, has a default route to VCN VR 105 using IP address 10.0.0.1, which is the IP address for a port of VCN VR 105 for Subnet-1.

Subnet-2 can have multiple compute instances deployed on it, including virtual machine instances and/or bare metal instances. For example, as shown in FIG. 1, compute instances D1 and D2 are part of Subnet-2 via VNICs associated with the respective compute instances. In the embodiment depicted in FIG. 1, compute instance D1 has an overlay IP address of 10.1.0.2 and a MAC address of MM1, while compute instance D2 has a private overlay IP address of 10.1.0.3 and a MAC address of MM2. Each compute instance in Subnet-2, including compute instances D1 and D2, has a default route to VCN VR 105 using IP address 10.1.0.1, which is the IP address for a port of VCN VR 105 for Subnet-2.

VCN A 104 may also include one or more load balancers. For example, a load balancer may be provided for a subnet and may be configured to load balance traffic across multiple compute instances on the subnet. A load balancer may also be provided to load balance traffic across subnets in the VCN.

A particular compute instance deployed on VCN 104 can communicate with various different endpoints. These endpoints may include endpoints that are hosted by CSPI 200 and endpoints outside CSPI 200. Endpoints that are hosted by CSPI 101 may include: an endpoint on the same subnet as the particular compute instance (e.g., communications between two compute instances in Subnet-1); an endpoint on a different subnet but within the same VCN (e.g., communication between a compute instance in Subnet-1 and a compute instance in Subnet-2); an endpoint in a different VCN in the same region (e.g., communications between a compute instance in Subnet-1 and an endpoint in a VCN in the same region 106 or 110, communications between a compute instance in Subnet-1 and an endpoint in service network 110 in the same region); or an endpoint in a VCN in a different region (e.g., communications between a compute instance in Subnet-1 and an endpoint in a VCN in a different region 108). A compute instance in a subnet hosted by CSPI 101 may also communicate with endpoints that are not hosted by CSPI 101 (i.e., are outside CSPI 101). These outside endpoints include endpoints in the customer's on-premise network 116, endpoints within other remote cloud hosted networks 118, public endpoints 114 accessible via a public network such as the Internet, and other endpoints.

Communications between compute instances on the same subnet are facilitated using VNICs associated with the source compute instance and the destination compute instance. For example, compute instance C1 in Subnet-1 may want to send packets to compute instance C2 in Subnet-1. For a packet originating at a source compute instance and whose destination is another compute instance in the same subnet, the packet is first processed by the VNIC associated with the source compute instance. Processing performed by the VNIC associated with the source compute instance can include determining destination information for the packet from the packet headers, identifying any policies (e.g., security lists) configured for the VNIC associated with the source compute instance, determining a next hop for the packet, performing any packet encapsulation/decapsulation functions as needed, and then forwarding/routing the packet to the next hop with the goal of facilitating communication of the packet to its intended destination. When the destination compute instance is in the same subnet as the source compute instance, the VNIC associated with the source compute instance is configured to identify the VNIC associated with the destination compute instance and forward the packet to that VNIC for processing. The VNIC associated with the destination compute instance is then executed and forwards the packet to the destination compute instance.

For a packet to be communicated from a compute instance in a subnet to an endpoint in a different subnet in the same VCN, the communication is facilitated by the VNICs associated with the source and destination compute instances and the VCN VR. For example, if compute instance C1 in Subnet-1 in FIG. 1 wants to send a packet to compute instance D1 in Subnet-2, the packet is first processed by the VNIC associated with compute instance C1. The VNIC associated with compute instance C1 is configured to route the packet to the VCN VR 105 using default route or port 10.0.0.1 of the VCN VR. VCN VR 105 is configured to route the packet to Subnet-2 using port 10.1.0.1. The packet is then received and processed by the VNIC associated with D1 and the VNIC forwards the packet to compute instance D1.

For a packet to be communicated from a compute instance in VCN 104 to an endpoint that is outside VCN 104, the communication is facilitated by the VNIC associated with the source compute instance, VCN VR 105, and gateways associated with VCN 104. One or more types of gateways may be associated with VCN 104. A gateway is an interface between a VCN and another endpoint, where the another endpoint is outside the VCN. A gateway is a Layer-3/IP layer concept and enables a VCN to communicate with endpoints outside the VCN. A gateway thus facilitates traffic flow between a VCN and other VCNs or networks. Various different types of gateways may be configured for a VCN to facilitate different types of communications with different types of endpoints. Depending upon the gateway, the communications may be over public networks (e.g., the Internet) or over private networks. Various communication protocols may be used for these communications.

For example, compute instance C1 may want to communicate with an endpoint outside VCN 104. The packet may be first processed by the VNIC associated with source compute instance C1. The VNIC processing determines that the destination for the packet is outside the Subnet-1 of C1. The VNIC associated with C1 may forward the packet to VCN VR 105 for VCN 104. VCN VR 105 then processes the packet and as part of the processing, based upon the destination for the packet, determines a particular gateway associated with VCN 104 as the next hop for the packet. VCN VR 105 may then forward the packet to the particular identified gateway. For example, if the destination is an endpoint within the customer's on-premise network, then the packet may be forwarded by VCN VR 105 to Dynamic Routing Gateway (DRG) gateway 122 configured for VCN 104. The packet may then be forwarded from the gateway to a next hop to facilitate communication of the packet to it final intended destination.

Various different types of gateways may be configured for a VCN. Examples of gateways that may be configured for a VCN are depicted in FIG. 1 and described below. Examples of gateways associated with a VCN are also depicted in FIGs. 12, 13, 14, and 15 (for example, gateways referenced by reference numbers 1234, 1236, 1238, 1334, 1336, 1338, 1434, 1436, 1438, 1534, 1536, and 1538) and described below. As shown in the embodiment depicted in FIG. 1, a Dynamic Routing Gateway (DRG) 122 may be added to or be associated with customer VCN 104 and provides a path for private network traffic communication between customer VCN 104 and another endpoint, where the another endpoint can be the customer's on-premise network 116, a VCN 108 in a different region of CSPI 101, or other remote cloud networks 118 not hosted by CSPI 101. Customer on-premise network 116 may be a customer network or a customer data center built using the customer's resources. Access to customer on-premise network 116 is generally very restricted. For a customer that has both a customer on-premise network 116 and one or more VCNs 104 deployed or hosted in the cloud by CSPI 101, the customer may want their on-premise network 116 and their cloud-based VCN 104 to be able to communicate with each other. This enables a customer to build an extended hybrid environment encompassing the customer's VCN 104 hosted by CSPI 101 and their on-premises network 116. DRG 122 enables this communication. To enable such communications, a communication channel 124 is set up where one endpoint of the channel is in customer on-premise network 116 and the other endpoint is in CSPI 101 and connected to customer VCN 104. Communication channel 124 can be over public communication networks such as the Internet or private communication networks. Various different communication protocols may be used such as IPsec VPN technology over a public communication network such as the Internet, Oracle's FastConnect technology that uses a private network instead of a public network, and others. The device or equipment in customer on-premise network 116 that forms one end point for communication channel 124 is referred to as the customer premise equipment (CPE), such as CPE 126 depicted in FIG. 1. On the CSPI 101 side, the endpoint may be a host machine executing DRG 122.
In certain embodiments, a Remote Peering Connection (RPC) can be added to a DRG, which allows a customer to peer one VCN with another VCN in a different region. Using such an RPC, customer VCN 104 can use DRG 122 to connect with a VCN 108 in another region. DRG 122 may also be used to communicate with other remote cloud networks 118, not hosted by CSPI 101 such as a Microsoft Azure cloud, Amazon AWS cloud, and others.

As shown in FIG. 1, an Internet Gateway (IGW) 120 may be configured for customer VCN 104 the enables a compute instance on VCN 104 to communicate with public endpoints 114 accessible over a public network such as the Internet. IGW 1120 is a gateway that connects a VCN to a public network such as the Internet. IGW 120 enables a public subnet (where the resources in the public subnet have public overlay IP addresses) within a VCN, such as VCN 104, direct access to public endpoints 112 on a public network 114 such as the Internet. Using IGW 120, connections can be initiated from a subnet within VCN 104 or from the Internet.

A Network Address Translation (NAT) gateway 128 can be configured for customer's VCN 104 and enables cloud resources in the customer's VCN, which do not have dedicated public overlay IP addresses, access to the Internet and it does so without exposing those resources to direct incoming Internet connections (e.g., L4-L7 connections). This enables a private subnet within a VCN, such as private Subnet-1 in VCN 104, with private access to public endpoints on the Internet. In NAT gateways, connections can be initiated only from the private subnet to the public Internet and not from the Internet to the private subnet.

In certain embodiments, a Service Gateway (SGW) 126 can be configured for customer VCN 104 and provides a path for private network traffic between VCN 104 and supported services endpoints in a service network 110. In certain embodiments, service network 110 may be provided by the CSP and may provide various services. An example of such a service network is Oracle's Services Network, which provides various services that can be used by customers. For example, a compute instance (e.g., a database system) in a private subnet of customer VCN 104 can back up data to a service endpoint (e.g., Object Storage) without needing public IP addresses or access to the Internet. In certain embodiments, a VCN can have only one SGW, and connections can only be initiated from a subnet within the VCN and not from service network 110. If a VCN is peered with another, resources in the other VCN typically cannot access the SGW. Resources in on-premises networks that are connected to a VCN with FastConnect or VPN Connect can also use the service gateway configured for that VCN.

In certain implementations, SGW 126 uses the concept of a service Classless Inter-Domain Routing (CIDR) label, which is a string that represents all the regional public IP address ranges for the service or group of services of interest. The customer uses the service CIDR label when they configure the SGW and related route rules to control traffic to the service. The customer can optionally utilize it when configuring security rules without needing to adjust them if the service's public IP addresses change in the future.

A Local Peering Gateway (LPG) 132 is a gateway that can be added to customer VCN 104 and enables VCN 104 to peer with another VCN in the same region. Peering means that the VCNs communicate using private IP addresses, without the traffic traversing a public network such as the Internet or without routing the traffic through the customer's on-premises network 116. In preferred embodiments, a VCN has a separate LPG for each peering it establishes. Local Peering or VCN Peering is a common practice used to establish network connectivity between different applications or infrastructure management functions.

Service providers, such as providers of services in service network 110, may provide access to services using different access models. According to a public access model, services may be exposed as public endpoints that are publicly accessible by compute instance in a customer VCN via a public network such as the Internet and or may be privately accessible via SGW 126. According to a specific private access model, services are made accessible as private IP endpoints in a private subnet in the customer's VCN. This is referred to as a Private Endpoint (PE) access and enables a service provider to expose their service as an instance in the customer's private network. A Private Endpoint resource represents a service within the customer's VCN. Each PE manifests as a VNIC (referred to as a PE-VNIC, with one or more private IPs) in a subnet chosen by the customer in the customer's VCN. A PE thus provides a way to present a service within a private customer VCN subnet using a VNIC. Since the endpoint is exposed as a VNIC, all the features associates with a VNIC such as routing rules, security lists, etc., are now available for the PE VNIC.

A service provider can register their service to enable access through a PE. The provider can associate policies with the service that restricts the service's visibility to the customer tenancies. A provider can register multiple services under a single virtual IP address (VIP), especially for multi-tenant services. There may be multiple such private endpoints (in multiple VCNs) that represent the same service.

Compute instances in the private subnet can then use the PE VNIC's private IP address or the service DNS name to access the service. Compute instances in the customer VCN can access the service by sending traffic to the private IP address of the PE in the customer VCN. A Private Access Gateway (PAGW) 130 is a gateway resource that can be attached to a service provider VCN (e.g., a VCN in service network 110) that acts as an ingress/egress point for all traffic from/to customer subnet private endpoints. PAGW 130 enables a provider to scale the number of PE connections without utilizing its internal IP address resources. A provider needs only configure one PAGW for any number of services registered in a single VCN. Providers can represent a service as a private endpoint in multiple VCNs of one or more customers. From the customer's perspective, the PE VNIC, which, instead of being attached to a customer's instance, appears attached to the service with which the customer wishes to interact. The traffic destined to the private endpoint is routed via PAGW 130 to the service. These are referred to as customer-to-service private connections (C2S connections).

The PE concept can also be used to extend the private access for the service to customer's on-premises networks and data centers, by allowing the traffic to flow through FastConnect/IPsec links and the private endpoint in the customer VCN. Private access for the service can also be extended to the customer's peered VCNs, by allowing the traffic to flow between LPG 132 and the PE in the customer's VCN.

A customer can control routing in a VCN at the subnet level, so the customer can specify which subnets in the customer's VCN, such as VCN 104, use each gateway. A VCN's route tables are used to decide if traffic is allowed out of a VCN through a particular gateway. For example, in a particular instance, a route table for a public subnet within customer VCN 104 may send non-local traffic through IGW 120. The route table for a private subnet within the same customer VCN 104 may send traffic destined for CSP services through SGW 126. All remaining traffic may be sent via the NAT gateway 128. Route tables only control traffic going out of a VCN.

Security lists associated with a VCN are used to control traffic that comes into a VCN via a gateway via inbound connections. All resources in a subnet use the same route table and security lists. Security lists may be used to control specific types of traffic allowed in and out of instances in a subnet of a VCN. Security list rules may comprise ingress (inbound) and egress (outbound) rules. For example, an ingress rule may specify an allowed source address range, while an egress rule may specify an allowed destination address range. Security rules may specify a particular protocol (e.g., TCP, ICMP), a particular port (e.g., 22 for SSH, 3389 for Windows RDP), etc. In certain implementations, an instance's operating system may enforce its own firewall rules that are aligned with the security list rules. Rules may be stateful (e.g., a connection is tracked and the response is automatically allowed without an explicit security list rule for the response traffic) or stateless.

Access from a customer VCN (i.e., by a resource or compute instance deployed on VCN 104) can be categorized as public access, private access, or dedicated access. Public access refers to an access model where a public IP address or a NAT is used to access a public endpoint. Private access enables customer workloads in VCN 104 with private IP addresses (e.g., resources in a private subnet) to access services without traversing a public network such as the Internet. In certain embodiments, CSPI 101 enables customer VCN workloads with private IP addresses to access the (public service endpoints of) services using a service gateway. A service gateway thus offers a private access model by establishing a virtual link between the customer's VCN and the service's public endpoint residing outside the customer's private network.

Additionally, CSPI may offer dedicated public access using technologies such as FastConnect public peering where customer on-premises instances can access one or more services in a customer VCN using a FastConnect connection and without traversing a public network such as the Internet. CSPI also may also offer dedicated private access using FastConnect private peering where customer on-premises instances with private IP addresses can access the customer's VCN workloads using a FastConnect connection. FastConnect is a network connectivity alternative to using the public Internet to connect a customer's on-premise network to CSPI and its services. FastConnect provides an easy, elastic, and economical way to create a dedicated and private connection with higher bandwidth options and a more reliable and consistent networking experience when compared to Internet-based connections.

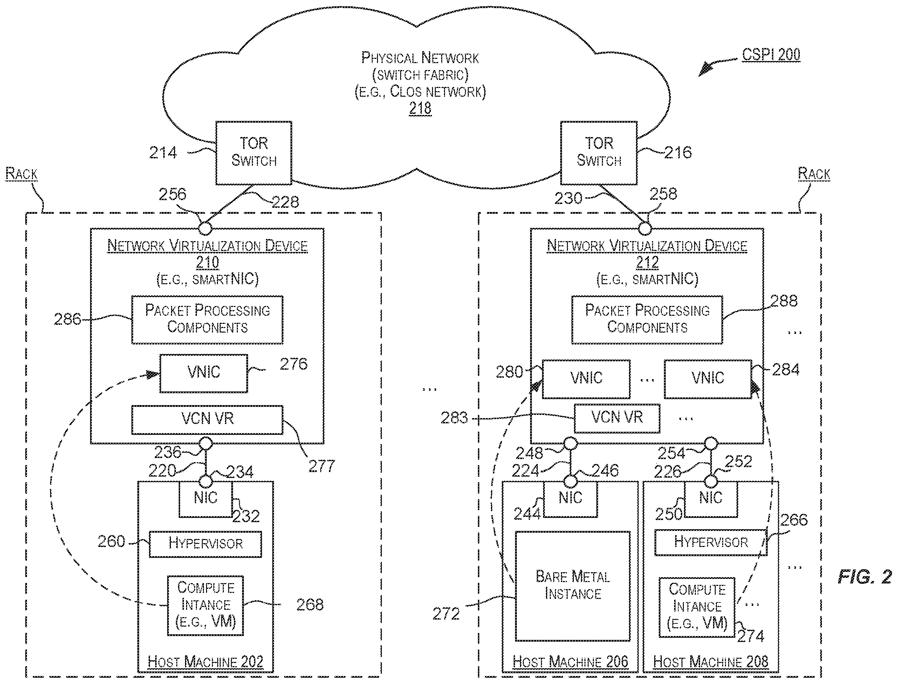

FIG. 1 and the accompanying description above describes various virtualized components in an example virtual network. As described above, the virtual network is built on the underlying physical or substrate network. FIG. 2 depicts a simplified architectural diagram of the physical components in the physical network within CSPI 200 that provide the underlay for the virtual network according to certain embodiments. As shown, CSPI 200 provides a distributed environment comprising components and resources (e.g., compute, memory, and networking resources) provided by a cloud service provider (CSP). These components and resources are used to provide cloud services (e.g., IaaS services) to subscribing customers, i.e., customers that have subscribed to one or more services provided by the CSP. Based upon the services subscribed to by a customer, a subset of resources (e.g., compute, memory, and networking resources) of CSPI 200 are provisioned for the customer. Customers can then build their own cloud-based (i.e., CSPI-hosted) customizable and private virtual networks using physical compute, memory, and networking resources provided by CSPI 200. As previously indicated, these customer networks are referred to as virtual cloud networks (VCNs). A customer can deploy one or more customer resources, such as compute instances, on these customer VCNs. Compute instances can be in the form of virtual machines, bare metal instances, and the like. CSPI 200 provides infrastructure and a set of complementary cloud services that enable customers to build and run a wide range of applications and services in a highly available hosted environment.

In the example embodiment depicted in FIG. 2, the physical components of CSPI 200 include one or more physical host machines or physical servers (e.g., 202, 206, 208), network virtualization devices (NVDs) (e.g., 210, 212), top-of-rack (TOR) switches (e.g., 214, 216), and a physical network (e.g., 218), and switches in physical network 218. The physical host machines or servers may host and execute various compute instances that participate in one or more subnets of a VCN. The compute instances may include virtual machine instances, and bare metal instances. For example, the various compute instances depicted in FIG. 1 may be hosted by the physical host machines depicted in FIG. 2. The virtual machine compute instances in a VCN may be executed by one host machine or by multiple different host machines. The physical host machines may also host virtual host machines, container-based hosts or functions, and the like. The VNICs and VCN VR depicted in FIG. 1 may be executed by the NVDs depicted in FIG. 2. The gateways depicted in FIG. 1 may be executed by the host machines and/or by the NVDs depicted in FIG. 2.

The host machines or servers may execute a hypervisor (also referred to as a virtual machine monitor or VMM) that creates and enables a virtualized environment on the host machines. The virtualization or virtualized environment facilitates cloud-based computing. One or more compute instances may be created, executed, and managed on a host machine by a hypervisor on that host machine. The hypervisor on a host machine enables the physical computing resources of the host machine (e.g., compute, memory, and networking resources) to be shared between the various compute instances executed by the host machine.

For example, as depicted in FIG. 2, host machines 202 and 208 execute hypervisors 260 and 266, respectively. These hypervisors may be implemented using software, firmware, or hardware, or combinations thereof. Typically, a hypervisor is a process or a software layer that sits on top of the host machine's operating system (OS), which in turn executes on the hardware processors of the host machine. The hypervisor provides a virtualized environment by enabling the physical computing resources (e.g., processing resources such as processors/cores, memory resources, networking resources) of the host machine to be shared among the various virtual machine compute instances executed by the host machine. For example, in FIG. 2, hypervisor 260 may sit on top of the OS of host machine 202 and enables the computing resources (e.g., processing, memory, and networking resources) of host machine 202 to be shared between compute instances (e.g., virtual machines) executed by host machine 202. A virtual machine can have its own operating system (referred to as a guest operating system), which may be the same as or different from the OS of the host machine. The operating system of a virtual machine executed by a host machine may be the same as or different from the operating system of another virtual machine executed by the same host machine. A hypervisor thus enables multiple operating systems to be executed alongside each other while sharing the same computing resources of the host machine. The host machines depicted in FIG. 2 may have the same or different types of hypervisors.

A compute instance can be a virtual machine instance or a bare metal instance. In FIG. 2, compute instances 268 on host machine 202 and 274 on host machine 208 are examples of virtual machine instances. Host machine 206 is an example of a bare metal instance that is provided to a customer.

In certain instances, an entire host machine may be provisioned to a single customer, and all of the one or more compute instances (either virtual machines or bare metal instance) hosted by that host machine belong to that same customer. In other instances, a host machine may be shared between multiple customers (i.e., multiple tenants). In such a multi-tenancy scenario, a host machine may host virtual machine compute instances belonging to different customers. These compute instances may be members of different VCNs of different customers. In certain embodiments, a bare metal compute instance is hosted by a bare metal server without a hypervisor. When a bare metal compute instance is provisioned, a single customer or tenant maintains control of the physical CPU, memory, and network interfaces of the host machine hosting the bare metal instance and the host machine is not shared with other customers or tenants.

As previously described, each compute instance that is part of a VCN is associated with a VNIC that enables the compute instance to become a member of a subnet of the VCN. The VNIC associated with a compute instance facilitates the communication of packets or frames to and from the compute instance. A VNIC is associated with a compute instance when the compute instance is created. In certain embodiments, for a compute instance executed by a host machine, the VNIC associated with that compute instance is executed by an NVD connected to the host machine. For example, in FIG. 2, host machine 202 executes a virtual machine compute instance 268 that is associated with VNIC 276, and VNIC 276 is executed by NVD 210 connected to host machine 202. As another example, bare metal instance 272 hosted by host machine 206 is associated with VNIC 280 that is executed by NVD 212 connected to host machine 206. As yet another example, VNIC 284 is associated with compute instance 274 executed by host machine 208, and VNIC 284 is executed by NVD 212 connected to host machine 208.

For compute instances hosted by a host machine, an NVD connected to that host machine also executes VCN VRs corresponding to VCNs of which the compute instances are members. For example, in the embodiment depicted in FIG. 2, NVD 210 executes VCN VR 277 corresponding to the VCN of which compute instance 268 is a member. NVD 212 may also execute one or more VCN VRs 283 corresponding to VCNs corresponding to the compute instances hosted by host machines 206 and 208.

A host machine may include one or more network interface cards (NIC) that enable the host machine to be connected to other devices. A NIC on a host machine may provide one or more ports (or interfaces) that enable the host machine to be communicatively connected to another device. For example, a host machine may be connected to an NVD using one or more ports (or interfaces) provided on the host machine and on the NVD. A host machine may also be connected to other devices such as another host machine.

For example, in FIG. 2, host machine 202 is connected to NVD 210 using link 220 that extends between a port 234 provided by a NIC 232 of host machine 202 and between a port 236 of NVD 210. Host machine 206 is connected to NVD 212 using link 224 that extends between a port 246 provided by a NIC 244 of host machine 206 and between a port 248 of NVD 212. Host machine 208 is connected to NVD 212 using link 226 that extends between a port 252 provided by a NIC 250 of host machine 208 and between a port 254 of NVD 212.

The NVDs are in turn connected via communication links to top-of-the-rack (TOR) switches, which are connected to physical network 218 (also referred to as the switch fabric). In certain embodiments, the links between a host machine and an NVD, and between an NVD and a TOR switch are Ethernet links. For example, in FIG. 2, NVDs 210 and 212 are connected to TOR switches 214 and 216, respectively, using links 228 and 230. In certain embodiments, the links 220, 224, 226, 228, and 230 are Ethernet links. The collection of host machines and NVDs that are connected to a TOR is sometimes referred to as a rack.

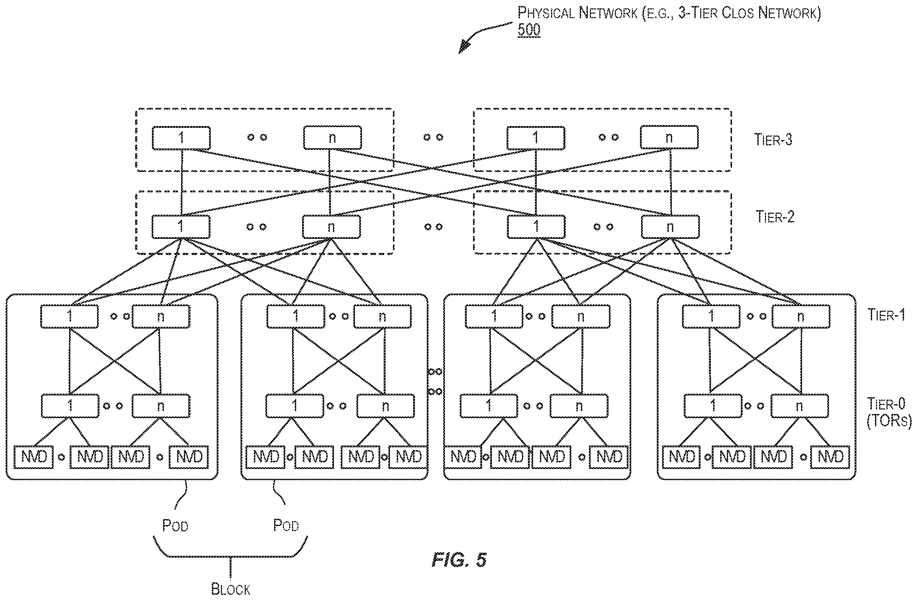

Physical network 218 provides a communication fabric that enables TOR switches to communicate with each other. Physical network 218 can be a multi-tiered network. In certain implementations, physical network 218 is a multi-tiered Clos network of switches, with TOR switches 214 and 216 representing the leaf level nodes of the multi-tiered and multi-node physical switching network 218. Different Clos network configurations are possible including but not limited to a 2-tier network, a 3-tier network, a 4-tier network, a 5-tier network, and in general a "n"-tiered network. An example of a Clos network is depicted in FIG. 5 and described below.

Various different connection configurations are possible between host machines and NVDs such as one-to-one configuration, many-to-one configuration, one-to-many configuration, and others. In a one-to-one configuration implementation, each host machine is connected to its own separate NVD. For example, in FIG. 2, host machine 202 is connected to NVD 210 via NIC 232 of host machine 202. In a many-to-one configuration, multiple host machines are connected to one NVD. For example, in FIG. 2, host machines 206 and 208 are connected to the same NVD 212 via NICs 244 and 250, respectively.

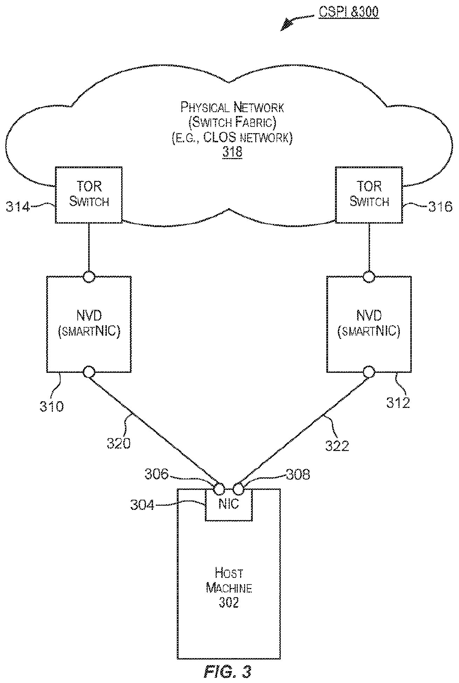

In a one-to-many configuration, one host machine is connected to multiple NVDs. FIG. 3 shows an example within CSPI 300 where a host machine is connected to multiple NVDs. As shown in FIG. 3, host machine 302 comprises a network interface card (NIC) 304 that includes multiple ports 306 and 308. Host machine 300 is connected to a first NVD 310 via port 306 and link 320, and connected to a second NVD 312 via port 308 and link 322. Ports 306 and 308 may be Ethernet ports and the links 320 and 322 between host machine 302 and NVDs 310 and 312 may be Ethernet links. NVD 310 is in turn connected to a first TOR switch 314 and NVD 312 is connected to a second TOR switch 316. The links between NVDs 310 and 312, and TOR switches 314 and 316 may be Ethernet links. TOR switches 314 and 316 represent the Tier-0 switching devices in multi-tiered physical network 318.

The arrangement depicted in FIG. 3 provides two separate physical network paths to and from physical switch network 318 to host machine 302: a first path traversing TOR switch 314 to NVD 310 to host machine 302, and a second path traversing TOR switch 316 to NVD 312 to host machine 302. The separate paths provide for enhanced availability (referred to as high availability) of host machine 302. If there are problems in one of the paths (e.g., a link in one of the paths goes down) or devices (e.g., a particular NVD is not functioning), then the other path may be used for communications to/from host machine 302.

In the configuration depicted in FIG. 3, the host machine is connected to two different NVDs using two different ports provided by a NIC of the host machine. In other embodiments, a host machine may include multiple NICs that enable connectivity of the host machine to multiple NVDs.

Referring back to FIG. 2, an NVD is a physical device or component that performs one or more network and/or storage virtualization functions. An NVD may be any device with one or more processing units (e.g., CPUs, Network Processing Units (NPUs), FPGAs, packet processing pipelines, etc.), memory including cache, and ports. The various virtualization functions may be performed by software/firmware executed by the one or more processing units of the NVD.

An NVD may be implemented in various different forms. For example, in certain embodiments, an NVD is implemented as an interface card referred to as a smartNIC or an intelligent NIC with an embedded processor onboard. A smartNIC is a separate device from the NICs on the host machines. In FIG. 2, the NVDs 210 and 212 may be implemented as smartNICs that are connected to host machines 202, and host machines 206 and 208, respectively.

A smartNIC is however just one example of an NVD implementation. Various other implementations are possible. For example, in some other implementations, an NVD or one or more functions performed by the NVD may be incorporated into or performed by one or more host machines, one or more TOR switches, and other components of CSPI 200. For example, an NVD may be embodied in a host machine where the functions performed by an NVD are performed by the host machine. As another example, an NVD may be part of a TOR switch or a TOR switch may be configured to perform functions performed by an NVD that enables the TOR switch to perform various complex packet transformations that are used for a public cloud. A TOR that performs the functions of an NVD is sometimes referred to as a smart TOR. In yet other implementations, where virtual machines (VMs) instances, but not bare metal (BM) instances, are offered to customers, functions performed by an NVD may be implemented inside a hypervisor of the host machine. In some other implementations, some of the functions of the NVD may be offloaded to a centralized service running on a fleet of host machines.

In certain embodiments, such as when implemented as a smartNIC as shown in FIG. 2, an NVD may comprise multiple physical ports that enable it to be connected to one or more host machines and to one or more TOR switches. A port on an NVD can be classified as a host-facing port (also referred to as a "south port") or a network-facing or TOR-facing port (also referred to as a "north port"). A host-facing port of an NVD is a port that is used to connect the NVD to a host machine. Examples of host-facing ports in FIG. 2 include port 236 on NVD 210, and ports 248 and 254 on NVD 212. A network-facing port of an NVD is a port that is used to connect the NVD to a TOR switch. Examples of network-facing ports in FIG. 2 include port 256 on NVD 210, and port 258 on NVD 212. As shown in FIG. 2, NVD 210 is connected to TOR switch 214 using link 228 that extends from port 256 of NVD 210 to the TOR switch 214. Likewise, NVD 212 is connected to TOR switch 216 using link 230 that extends from port 258 of NVD 212 to the TOR switch 216.

An NVD receives packets and frames from a host machine (e.g., packets and frames generated by a compute instance hosted by the host machine) via a host-facing port and, after performing the necessary packet processing, may forward the packets and frames to a TOR switch via a network-facing port of the NVD. An NVD may receive packets and frames from a TOR switch via a network-facing port of the NVD and, after performing the necessary packet processing, may forward the packets and frames to a host machine via a host-facing port of the NVD.

In certain embodiments, there may be multiple ports and associated links between an NVD and a TOR switch. These ports and links may be aggregated to form a link aggregator group of multiple ports or links (referred to as a LAG). Link aggregation allows multiple physical links between two end-points (e.g., between an NVD and a TOR switch) to be treated as a single logical link. All the physical links in a given LAG may operate in full-duplex mode at the same speed. LAGs help increase the bandwidth and reliability of the connection between two endpoints. If one of the physical links in the LAG goes down, traffic is dynamically and transparently reassigned to one of the other physical links in the LAG. The aggregated physical links deliver higher bandwidth than each individual link. The multiple ports associated with a LAG are treated as a single logical port. Traffic can be load-balanced across the multiple physical links of a LAG. One or more LAGs may be configured between two endpoints. The two endpoints may be between an NVD and a TOR switch, between a host machine and an NVD, and the like.

An NVD implements or performs network virtualization functions. These functions are performed by software/firmware executed by the NVD. Examples of network virtualization functions include without limitation: packet encapsulation and de-capsulation functions; functions for creating a VCN network; functions for implementing network policies such as VCN security list (firewall) functionality; functions that facilitate the routing and forwarding of packets to and from compute instances in a VCN; and the like. In certain embodiments, upon receiving a packet, an NVD is configured to execute a packet processing pipeline for processing the packet and determining how the packet is to be forwarded or routed. As part of this packet processing pipeline, the NVD may execute one or more virtual functions associated with the overlay network such as executing VNICs associated with cis in the VCN, executing a Virtual Router (VR) associated with the VCN, the encapsulation and decapsulation of packets to facilitate forwarding or routing in the virtual network, execution of certain gateways (e.g., the Local Peering Gateway), the implementation of Security Lists, Network Security Groups, network address translation (NAT) functionality (e.g., the translation of Public IP to Private IP on a host by host basis), throttling functions, and other functions.

In certain embodiments, the packet processing data path in an NVD may comprise multiple packet pipelines, each composed of a series of packet transformation stages. In certain implementations, upon receiving a packet, the packet is parsed and classified to a single pipeline. The packet is then processed in a linear fashion, one stage after another, until the packet is either dropped or sent out over an interface of the NVD. These stages provide basic functional packet processing building blocks (e.g., validating headers, enforcing throttle, inserting new Layer-2 headers, enforcing L4 firewall, VCN encapsulation/decapsulation, etc.) so that new pipelines can be constructed by composing existing stages, and new functionality can be added by creating new stages and inserting them into existing pipelines.

An NVD may perform both control plane and data plane functions corresponding to a control plane and a data plane of a VCN. Examples of a VCN Control Plane are also depicted in FIGs. 12, 13, 14, and 15 (see references 1216, 1316, 1416, and 1516) and described below. Examples of a VCN Data Plane are depicted in FIGs. 12, 13, 14, and 15 (see references 1218, 1318, 1418, and 1518) and described below. The control plane functions include functions used for configuring a network (e.g., setting up routes and route tables, configuring VNICs, etc.) that controls how data is to be forwarded. In certain embodiments, a VCN Control Plane is provided that computes all the overlay-to-substrate mappings centrally and publishes them to the NVDs and to the virtual network edge devices such as various gateways such as the DRG, the SGW, the IGW, etc. Firewall rules may also be published using the same mechanism. In certain embodiments, an NVD only gets the mappings that are relevant for that NVD. The data plane functions include functions for the actual routing/forwarding of a packet based upon configuration set up using control plane. A VCN data plane is implemented by encapsulating the customer's network packets before they traverse the substrate network. The encapsulation/decapsulation functionality is implemented on the NVDs. In certain embodiments, an NVD is configured to intercept all network packets in and out of host machines and perform network virtualization functions.

As indicated above, an NVD executes various virtualization functions including VNICs and VCN VRs. An NVD may execute VNICs associated with the compute instances hosted by one or more host machines connected to the VNIC. For example, as depicted in FIG. 2, NVD 210 executes the functionality for VNIC 276 that is associated with compute instance 268 hosted by host machine 202 connected to NVD 210. As another example, NVD 212 executes VNIC 280 that is associated with bare metal compute instance 272 hosted by host machine 206, and executes VNIC 284 that is associated with compute instance 274 hosted by host machine 208. A host machine may host compute instances belonging to different VCNs, which belong to different customers, and the NVD connected to the host machine may execute the VNICs (i.e., execute VNICs-relate functionality) corresponding to the compute instances.

An NVD also executes VCN Virtual Routers corresponding to the VCNs of the compute instances. For example, in the embodiment depicted in FIG. 2, NVD 210 executes VCN VR 277 corresponding to the VCN to which compute instance 268 belongs. NVD 212 executes one or more VCN VRs 283 corresponding to one or more VCNs to which compute instances hosted by host machines 206 and 208 belong. In certain embodiments, the VCN VR corresponding to that VCN is executed by all the NVDs connected to host machines that host at least one compute instance belonging to that VCN. If a host machine hosts compute instances belonging to different VCNs, an NVD connected to that host machine may execute VCN VRs corresponding to those different VCNs.

In addition to VNICs and VCN VRs, an NVD may execute various software (e.g., daemons) and include one or more hardware components that facilitate the various network virtualization functions performed by the NVD. For purposes of simplicity, these various components are grouped together as "packet processing components" shown in FIG. 2. For example, NVD 210 comprises packet processing components 286 and NVD 212 comprises packet processing components 288. For example, the packet processing components for an NVD may include a packet processor that is configured to interact with the NVD's ports and hardware interfaces to monitor all packets received by and communicated using the NVD and store network information. The network information may, for example, include network flow information identifying different network flows handled by the NVD and per flow information (e.g., per flow statistics). In certain embodiments, network flows information may be stored on a per VNIC basis. The packet processor may perform packet-by-packet manipulations as well as implement stateful NAT and L4 firewall (FW). As another example, the packet processing components may include a replication agent that is configured to replicate information stored by the NVD to one or more different replication target stores. As yet another example, the packet processing components may include a logging agent that is configured to perform logging functions for the NVD. The packet processing components may also include software for monitoring the performance and health of the NVD and, also possibly of monitoring the state and health of other components connected to the NVD.

FIG. 1 shows the components of an example virtual or overlay network including a VCN, subnets within the VCN, compute instances deployed on subnets, VNICs associated with the compute instances, a VR for a VCN, and a set of gateways configured for the VCN. The overlay components depicted in FIG. 1 may be executed or hosted by one or more of the physical components depicted in FIG. 2. For example, the compute instances in a VCN may be executed or hosted by one or more host machines depicted in FIG. 2. For a compute instance hosted by a host machine, the VNIC associated with that compute instance is typically executed by an NVD connected to that host machine (i.e., the VNIC functionality is provided by the NVD connected to that host machine). The VCN VR function for a VCN is executed by all the NVDs that are connected to host machines hosting or executing the compute instances that are part of that VCN. The gateways associated with a VCN may be executed by one or more different types of NVDs. For example, certain gateways may be executed by smartNICs, while others may be executed by one or more host machines or other implementations of NVDs.

As described above, a compute instance in a customer VCN may communicate with various different endpoints, where the endpoints can be within the same subnet as the source compute instance, in a different subnet but within the same VCN as the source compute instance, or with an endpoint that is outside the VCN of the source compute instance. These communications are facilitated using VNICs associated with the compute instances, the VCN VRs, and the gateways associated with the VCNs.

For communications between two compute instances on the same subnet in a VCN, the communication is facilitated using VNICs associated with the source and destination compute instances. The source and destination compute instances may be hosted by the same host machine or by different host machines. A packet originating from a source compute instance may be forwarded from a host machine hosting the source compute instance to an NVD connected to that host machine. On the NVD, the packet is processed using a packet processing pipeline, which can include execution of the VNIC associated with the source compute instance. Since the destination endpoint for the packet is within the same subnet, execution of the VNIC associated with the source compute instance results in the packet being forwarded to an NVD executing the VNIC associated with the destination compute instance, which then processes and forwards the packet to the destination compute instance. The VNICs associated with the source and destination compute instances may be executed on the same NVD (e.g., when both the source and destination compute instances are hosted by the same host machine) or on different NVDs (e.g., when the source and destination compute instances are hosted by different host machines connected to different NVDs). The VNICs may use routing/forwarding tables stored by the NVD to determine the next hop for the packet.

For a packet to be communicated from a compute instance in a subnet to an endpoint in a different subnet in the same VCN, the packet originating from the source compute instance is communicated from the host machine hosting the source compute instance to the NVD connected to that host machine. On the NVD, the packet is processed using a packet processing pipeline, which can include execution of one or more VNICs, and the VR associated with the VCN. For example, as part of the packet processing pipeline, the NVD executes or invokes functionality corresponding to the VNIC (also referred to as executes the VNIC) associated with source compute instance. The functionality performed by the VNIC may include looking at the VLAN tag on the packet. Since the packet's destination is outside the subnet, the VCN VR functionality is next invoked and executed by the NVD. The VCN VR then routes the packet to the NVD executing the VNIC associated with the destination compute instance. The VNIC associated with the destination compute instance then processes the packet and forwards the packet to the destination compute instance. The VNICs associated with the source and destination compute instances may be executed on the same NVD (e.g., when both the source and destination compute instances are hosted by the same host machine) or on different NVDs (e.g., when the source and destination compute instances are hosted by different host machines connected to different NVDs).

If the destination for the packet is outside the VCN of the source compute instance, then the packet originating from the source compute instance is communicated from the host machine hosting the source compute instance to the NVD connected to that host machine. The NVD executes the VNIC associated with the source compute instance. Since the destination end point of the packet is outside the VCN, the packet is then processed by the VCN VR for that VCN. The NVD invokes the VCN VR functionality, which may result in the packet being forwarded to an NVD executing the appropriate gateway associated with the VCN. For example, if the destination is an endpoint within the customer's on-premise network, then the packet may be forwarded by the VCN VR to the NVD executing the DRG gateway configured for the VCN. The VCN VR may be executed on the same NVD as the NVD executing the VNIC associated with the source compute instance or by a different NVD. The gateway may be executed by an NVD, which may be a smartNIC, a host machine, or other NVD implementation. The packet is then processed by the gateway and forwarded to a next hop that facilitates communication of the packet to its intended destination endpoint. For example, in the embodiment depicted in FIG. 2, a packet originating from compute instance 268 may be communicated from host machine 202 to NVD 210 over link 220 (using NIC 232). On NVD 210, VNIC 276 is invoked since it is the VNIC associated with source compute instance 268. VNIC 276 is configured to examine the encapsulated information in the packet, and determine a next hop for forwarding the packet with the goal of facilitating communication of the packet to its intended destination endpoint, and then forward the packet to the determined next hop.

A compute instance deployed on a VCN can communicate with various different endpoints. These endpoints may include endpoints that are hosted by CSPI 200 and endpoints outside CSPI 200. Endpoints hosted by CSPI 200 may include instances in the same VCN or other VCNs, which may be the customer's VCNs, or VCNs not belonging to the customer. Communications between endpoints hosted by CSPI 200 may be performed over physical network 218. A compute instance may also communicate with endpoints that are not hosted by CSPI 200, or are outside CSPI 200. Examples of these endpoints include endpoints within a customer's on-premise network or data center, or public endpoints accessible over a public network such as the Internet. Communications with endpoints outside CSPI 200 may be performed over public networks (e.g., the Internet) (not shown in FIG. 2) or private networks (not shown in FIG. 2) using various communication protocols.

The architecture of CSPI 200 depicted in FIG. 2 is merely an example and is not intended to be limiting. Variations, alternatives, and modifications are possible in alternative embodiments. For example, in some implementations, CSPI 200 may have more or fewer systems or components than those shown in FIG. 2, may combine two or more systems, or may have a different configuration or arrangement of systems. The systems, subsystems, and other components depicted in FIG. 2 may be implemented in software (e.g., code, instructions, program) executed by one or more processing units (e.g., processors, cores) of the respective systems, using hardware, or combinations thereof. The software may be stored on a non-transitory storage medium (e.g., on a memory device).

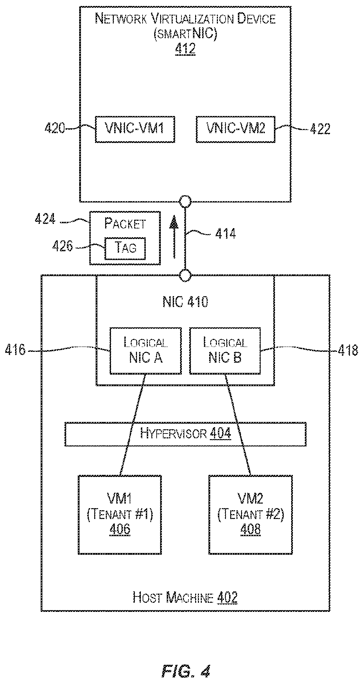

FIG. 4 depicts connectivity between a host machine and an NVD for providing I/O virtualization for supporting multitenancy according to certain embodiments. As depicted in FIG. 4, host machine 402 executes a hypervisor 404 that provides a virtualized environment. Host machine 402 executes two virtual machine instances, VM1 406 belonging to customer/tenant #1 and VM2 408 belonging to customer/tenant #2. Host machine 402 comprises a physical NIC 410 that is connected to an NVD 412 via link 414. Each of the compute instances is attached to a VNIC that is executed by NVD 412. In the embodiment in FIG. 4, VM1 406 is attached to VNIC-VM1 420 and VM2 408 is attached to VNIC-VM2 422.

As shown in FIG. 4, NIC 410 comprises two logical NICs, logical NIC A 416 and logical NIC B 418. Each virtual machine is attached to and configured to work with its own logical NIC. For example, VM1 406 is attached to logical NIC A 416 and VM2 408 is attached to logical NIC B 418. Even though host machine 402 comprises only one physical NIC 410 that is shared by the multiple tenants, due to the logical NICs, each tenant's virtual machine believes they have their own host machine and NIC.

In certain embodiments, each logical NIC is assigned its own VLAN ID. Thus, a specific VLAN ID is assigned to logical NIC A 416 for Tenant #1 and a separate VLAN ID is assigned to logical NIC B 418 for Tenant #2. When a packet is communicated from VM1 406, a tag assigned to Tenant #1 is attached to the packet by the hypervisor and the packet is then communicated from host machine 402 to NVD 412 over link 414. In a similar manner, when a packet is communicated from VM2 408, a tag assigned to Tenant #2 is attached to the packet by the hypervisor and the packet is then communicated from host machine 402 to NVD 412 over link 414. Accordingly, a packet 424 communicated from host machine 402 to NVD 412 has an associated tag 426 that identifies a specific tenant and associated VM. On the NVD, for a packet 424 received from host machine 402, the tag 426 associated with the packet is used to determine whether the packet is to be processed by VNIC-VM1 420 or by VNIC-VM2 422. The packet is then processed by the corresponding VNIC. The configuration depicted in FIG. 4 enables each tenant's compute instance to believe that they own their own host machine and NIC. The setup depicted in FIG. 4 provides for I/O virtualization for supporting multi-tenancy.

FIG. 5 depicts a simplified block diagram of a physical network 500 according to certain embodiments. The embodiment depicted in FIG. 5 is structured as a Clos network. A Clos network is a particular type of network topology designed to provide connection redundancy while maintaining high bisection bandwidth and maximum resource utilization. A Clos network is a type of non-blocking, multistage or multi-tiered switching network, where the number of stages or tiers can be two, three, four, five, etc. The embodiment depicted in FIG. 5 is a 3-tiered network comprising tiers 1, 2, and 3. The TOR switches 504 represent Tier-0 switches in the Clos network. One or more NVDs are connected to the TOR switches. Tier-0 switches are also referred to as edge devices of the physical network. The Tier-0 switches are connected to Tier-1 switches, which are also referred to as leaf switches. In the embodiment depicted in FIG. 5, a set of "n" Tier-0 TOR switches are connected to a set of "n" Tier-1 switches and together form a pod. Each Tier-0 switch in a pod is interconnected to all the Tier-1 switches in the pod, but there is no connectivity of switches between pods. In certain implementations, two pods are referred to as a block. Each block is served by or connected to a set of "n" Tier-2 switches (sometimes referred to as spine switches). There can be several blocks in the physical network topology. The Tier-2 switches are in turn connected to "n" Tier-3 switches (sometimes referred to as super-spine switches). Communication of packets over physical network 500 is typically performed using one or more Layer-3 communication protocols. Typically, all the layers of the physical network, except for the TORs layer are n-ways redundant thus allowing for high availability. Policies may be specified for pods and blocks to control the visibility of switches to each other in the physical network so as to enable scaling of the physical network.

A feature of a Clos network is that the maximum hop count to reach from one Tier-0 switch to another Tier-0 switch (or from an NVD connected to a Tier-0- switch to another NVD connected to a Tier-0 switch) is fixed. For example, in a 3-Tiered Clos network at most seven hops are needed for a packet to reach from one NVD to another NVD, where the source and target NVDs are connected to the leaf tier of the Clos network. Likewise, in a 4-tiered Clos network, at most nine hops are needed for a packet to reach from one NVD to another NVD, where the source and target NVDs are connected to the leaf tier of the Clos network. Thus, a Clos network architecture maintains consistent latency throughout the network, which is important for communication within and between data centers. A Clos topology scales horizontally and is cost effective. The bandwidth/throughput capacity of the network can be easily increased by adding more switches at the various tiers (e.g., more leaf and spine switches) and by increasing the number of links between the switches at adjacent tiers.

In certain embodiments, each resource within CSPI is assigned a unique identifier called a Cloud Identifier (CID). This identifier is included as part of the resource's information and can be used to manage the resource, for example, via a Console or through APIs. An example syntax for a CID is:
ocid1.<RESOURCE TYPE>.<REALM>.[REGION][.FUTURE USE].<UNIQUE ID>
where,
ocid1: The literal string indicating the version of the CID;
resource type: The type of resource (for example, instance, volume, VCN, subnet, user, group, and so on);
realm: The realm the resource is in. Example values are "c1" for the commercial realm, "c2" for the Government Cloud realm, or "c3" for the Federal Government Cloud realm, etc. Each realm may have its own domain name;
region: The region the resource is in. If the region is not applicable to the resource, this part might be blank;
future use: Reserved for future use.
unique ID: The unique portion of the ID. The format may vary depending on the type of resource or service.

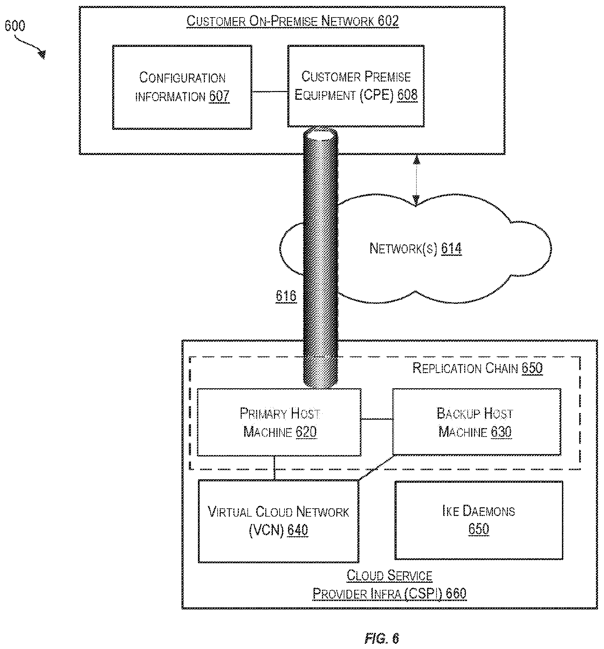

FIG. 6 depicts a simplified block diagram of a distributed environment 600 incorporating an exemplary embodiment for performing communication channel-related state information replication, according to certain embodiments.

Distributed environment 600 may comprise multiple systems communicatively coupled to each other via communication channel 616. For example, the embodiment in FIG. 6 depicts various systems and networks including a customer on-premise network 602 and cloud service provider infrastructure (CSPI) 660. These systems may be communicatively coupled with each other via communication channel 616. The distributed environment 600 depicted in FIG. 6 is merely an example and is not intended to unduly limit the scope of claimed embodiments. Many variations, alternatives, and modifications are possible. For example, in some implementations, the distributed environment 600 may have more or fewer systems or components than those shown in FIG. 6, may combine two or more systems, or may have a different configuration or arrangement of systems. The systems, subsystems, and other components depicted in FIG. 6 may be implemented in software (e.g., code, instructions, program) executed by one or more processing units (e.g., processors, cores) of the respective systems, using hardware, or combinations thereof. The software may be stored on a non-transitory storage medium (e.g., on a memory device).

In an example embodiment, as depicted in FIG. 6, customer on-premise network 602 may comprise of Customer Premise Equipment (CPE) 608 and configuration information 607. The customer on-premise network 602 is a network of one or more customer resources, such as one or more customer data centers. Access to customer on-premise network 602 is generally very restricted.

The device or equipment in the customer on-premise network 602 that forms one endpoint for communication channel 616 is referred to as the customer premise equipment (CPE), such as CPE 608 depicted in FIG. 6. CPE 608 has to be properly configured, using configuration information 607, to setup communication channel 616 and to enable communications between customer on-premise network 602 and host machine or endpoint 620 within CSPI 660 using the communication channel 616. Further, the particular configuration information to be applied to CPE 608 can depend upon various other factors such as the particular CPE 608 device being used, characteristics of the communication channel 616 being established (e.g., type of channel, protocol to be used for the communications, etc.), the CSPI 660 equipment, a primary host machine 620, that forms the other end point of the communication channel, and other criteria. The CPEs can be from different vendors, can have different CPE platforms, have different versions, and the like.

In an example embodiment, as depicted in FIG. 6, the cloud service provider infrastructure (CSPI) 660 may comprise of a virtual cloud network (VCN) 640, a primary host machine 620, and a backup host machine 630. The cloud services provider infrastructure (CSPI) 660 may be provided by a cloud service provider (CSP) and used to provide one or more cloud services. A customer can subscribe to one or more of these cloud services provided by the CSP using CSPI 660. A customer is any entity that subscribes to a cloud service provided by the CSP. A customer can subscribe to one or more cloud services including services of different types including SaaS, PaaS, IaaS, and other types of cloud services. When a customer subscribes to or registers for a service provided by a CSP, a tenancy or an account is created for that customer. The customer has access to this account and can use it to access cloud resources associated with the account.

In certain embodiments, a CSP may provide services under an IaaS model, wherein the CSP provides infrastructure, such as CSPI 660, that can be used by customers to build their own networks and deploy customer resources. In such embodiments, CSPI 660 may include interconnected high-performance computing resources including various host machines (primary host machine 620 and backup host machine 630), memory resources, and network resources that form a physical network, which is referred to as a substrate network or an underlay network. CSPI 660 can include one or more computing systems. The resources in CSPI 660 may be spread across one or more data centers that may be geographically spread across one or more regions.

The physical network provides the underlying basis for creating one or more virtual or overlay networks on top of the physical network. These virtual or overlay networks (also referred to as software-based or software-defined networks) are implemented using software virtualization technologies to create layers of network abstraction that can be run on top of the physical network. Overlay networks can take on many forms. Overlay networks typically use Layer-3 IP addressing with endpoints designated by their virtual IP addresses. This method of overlay networking is often referred to as virtual Layer 3 networking. When a customer subscribes to or registers for an IaaS service provided by a CSP, the tenancy created for that customer is a secure and isolated partition within CSPI 660 where the customer can create, organize, and administer their cloud resources.

A customer can build networks using resources provided by CSPI 660. One or more customer resources, such as compute instances, can be deployed on these networks. For example, a customer can use resources provided by CSPI 660 to build one or multiple customizable and private networks, referred to as virtual cloud networks or VCNs. For example, as depicted in FIG. 6, a customer has configured a customer VCN 640 using resources provided by CSPI 660. A customer can deploy one or more customer resources, such as compute instances, on these customer VCNs. Compute instances can take the form of virtual machines, containers, bare metal instances, and the like. CSPI 660 thus provides infrastructure and a set of complementary cloud services that enable customers to build and run a wide range of applications and services in a highly available hosted environment. The customer does not manage or control the underlying physical resources provided by CSPI 660 but has control over operating systems, storage, and deployed applications; and possibly limited control of select networking components (e.g., firewalls).

For a customer that has both a customer on-premise network 602 and one or more VCNs deployed or hosted in the cloud by CSPI 660, the customer generally wants their on-premise network 602 and cloud-based VCN networks such as VCN 640 to be able to communicate with each other. In order to enable communications between customer on-premise network 602 and provider VCN 640, a communication channel 616 is set up, where one endpoint lies within the customer on-premise network 602 e.g., CPE 108 and the other endpoint of the communication channel lies within the VCN 640 e.g., primary host machine 620. Communication channel 616 can traverse one or more communication networks 614, which may include a public network such as the Internet. Various different communication protocols may be used to facilitate communications between the on-premise network 602 and VCN 640 using communication channel 616 such as MPLS circuits, a virtual private network (VPN) (e.g., Internet Protocol Security (IPSec) VPN), and others.

Two endpoints i.e., the CPE 608 and the primary host machine 620 may negotiate with each other to set up a communication channel. Specifically, between two endpoints 608 and 620, a series of messages about encryption and authentication may be sent back and forth to negotiate an agreement involving encryption and authentication related parameters to be used. Upon the negotiations, a security association (SA) between two endpoints specifies security properties that are agreed upon and recognized by the communicating endpoints 608 and 620. A single SA may protect data in one direction. The SA provides detail to the both endpoints on how to encrypt and decrypt the data.

The particular configuration information 607 to be applied to CPE 608 can depend upon various other factors such as the particular CPE 608 device being used, characteristics of the communication channel being established (e.g., type of channel, protocol to be used for the communications, etc.), the CSPI equipment (primary host machine 620) that forms the other endpoint of the communication channel, and other criteria.

The Internet Key Exchange (IKE) daemons 650 within CSPI 660 manage cryptographic keys (e.g., encryption and decryption keys) for the communication channel. IKE daemons 650 may perform the negotiations with an endpoint within the customer on-premise network 602 to provide authenticated keying materials for security associations (SAs) in a protected manner.

As shown, the distributed environment 600 may comprise a backup host machine 630 connected to the primary host machine 620 within VCN 640. Both host machines are hosted by the CSPI 660 within VCN 640. In some embodiments, the primary host machine 620, the backup host machine 630, and any additional backup host machines may form a replication chain (RC 650). The replication chain may include a cluster of host machines that manages and stores state information for the communication channel 616 over a log based storage system. Information identifying a replication chain and backup host machines assigned to a specific host machine (620) may be stored on a disk-backed data storage. Within the replication chain, the host machines are linearly ordered to form a chain with a primary host machine (620) of the chain designated as a "head" or a "master" of the chain. In the above example, replication chain (RC) 650 comprises two hosts (e.g., the primary host machine 620 and the backup host machine 630) where the primary host machine 120 is a head of the chain and the backup host machine 630 is tail of the RC 650.

Communication network 614 facilitates communications between the various systems and networks depicted in FIG. 6. The communication network 614 can be of various types and can include one or more communication networks. Examples of communication network 614 include, without restriction, a public network such as the Internet, a wide area network (WAN), a local area network (LAN), an Ethernet network, a public or private network, a wired network, a wireless network, and the like, and combinations thereof. Different communication protocols may be used to facilitate the communications including both wired and wireless protocols such as IEEE 802.XX suite of protocols, TCP/IP, IPX, SAN, AppleTalk^{®}, Bluetooth^{®}, and other protocols. In general, the communication network 614 may include any infrastructure that facilitates communications between the various systems depicted in FIG. 6.

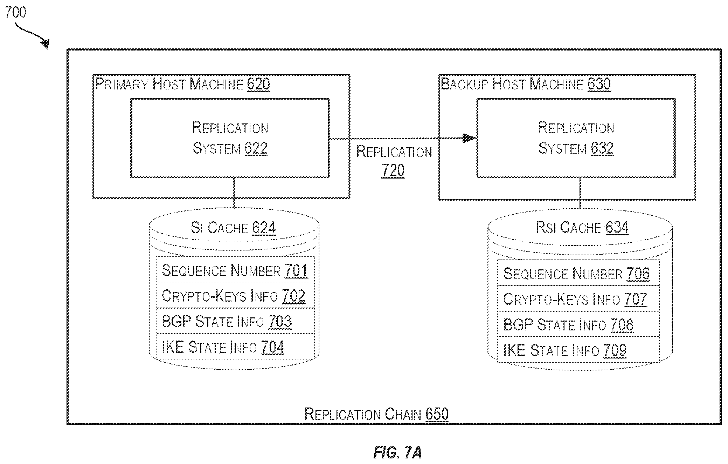

FIG. 7A depicts an example of block diagram showing a plurality of host machines within a replication chain, according to certain embodiments. In an example embodiment, as shown in FIG. 7A, the primary host machine 620 may comprise of various components or subsystems including a replication system (RS) 622 and state information cache 624. The backup host machine 630 may comprise of various components or subsystems including a replication system (RS) 632 and replicated state information cache 634.

In an example embodiment, as depicted in FIG. 7A, the RS 622 is a software application within the primary host machine 620 that performs processes associated with managing and replicating state information of the communication channel 616 between CPE 608 and the primary host machine 620 (as shown in FIG. 6). The state information for communication channel 616 may be stored within the state information cache 624. The state information cache 624 may be an in-memory key-value store to cache and manage the state information for the communication channel 616.

In some implementations, the RS 622 may provide a caching Application Programming Interface (API) which may be used by RS clients (e.g., a processor within host machine that processes packets) to conduct operations to manage state information for communication channel 616. For example, packets sent to Internet Protocol (IP) addresses for the primary host machine 620 may be received at a packet processor within the primary host machine 620. The packet processor may hash a header of the packet and analyze the hash data to determine any change in state information for the communication channel 616.

The hashing of the header of the packet may identify the tuple fields (e.g., packet identifier, a source IP address, a source port, a destination IP address, a destination port, and a layer 4 protocol). The packet processor uses this information to identify state information (e.g., packet number) related to the communication channel. The processor may further determine whether the state information has changed with respect to the state information of the communication channel stored within the cache associated with the primary host machine. Upon determining a change in the state information, the packet processor may forward the change in the state information of the communication channel 616 to further store and replicate the changes within the backup host machine. Accordingly, any information related to the communication channel 616 may be received and analyzed by the packet processor prior to receiving by the replication system 622.

In an alternative implementation, the RS 622 is the processor that receives and processes the packets, and performs operations to manage cache involving state information for the communication channel 616. Here the RS 622 within host machine 620 may receive a packet, identify a state information about the communication channel 616, and forward the state information to the state information cache 624. The RS 622 may perform the processing required to manage the state information on the backup host machine of the replication chain after obtaining the state information from a received packet. In certain embodiments, RS 622 may communicate with a disk-backed data storage to retrieve information about the backup host machine for the communication channel that is adjacent to the primary host machine within the replication chain 650.

In an example embodiment, another host machine (630) may include another set of replication system (RS) 632 which is connected to a replicated state information (RSI) cache 634. In some implementations, each of the host machines (primary host machine 620 and backup host machine 630) both have separate replication systems (622 and 632) that are configured to initiate and/or perform replication related functions. The replication system 622 of the primary host machine 620 may directly communicate with replication system 632 of the backup host machine to enable the replication system 632 to replicate the state information for the communication channel 616. Similarly, in some implementations, if replication chain (RC) 650 contains more than two host machines, a replication system from one host machine may communicate with its successor host machine within the chain to insert, update, or delete entries related to the state information replicated by the chain for the communication channel 616.

The fleet of replication systems may work cooperatively to replicate state information. In the above embodiment, every participating replication system in the fleet will be fully aware of the configuration of the chain, where the configuration information may identify host machines participating in the chain, a head of the chain, tail of the chain. Accordingly, every replication system may know where to send requests (e.g., a request to update an entry for communication channel state or to invalidate a specific entry for the state state). In some implementations, within the RC 650, the primary host machine 620 that actively processes packets for the communication channel 616 may be the head of the chain 650 and request an adjacent backup host machine (e.g., 630) for the communication channel to replicate a change in the state information for the communication channel.

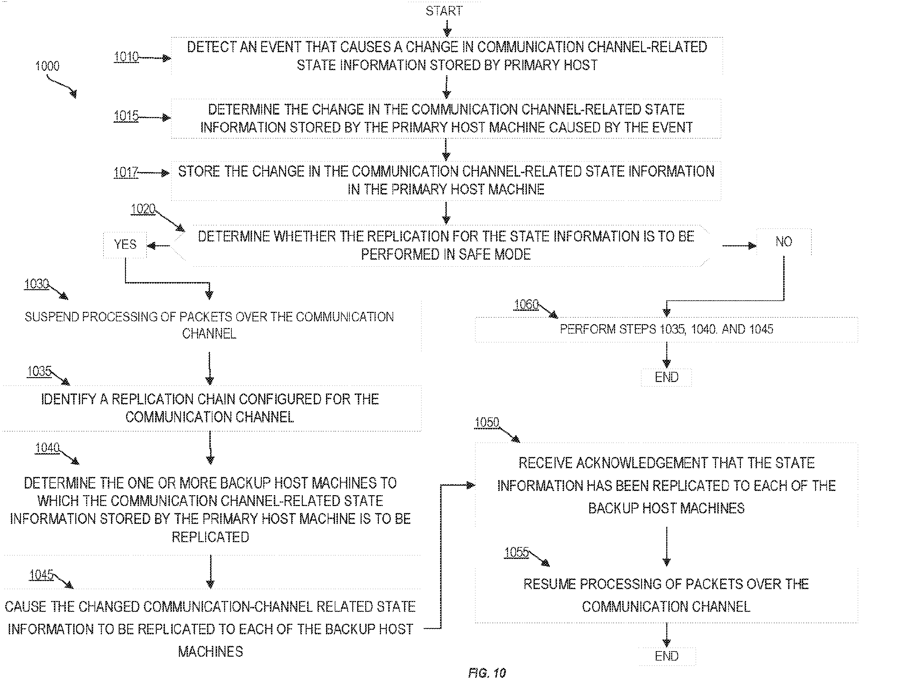

As depicted in FIG. 6 and FIG. 7A, within the chain RC 650, primary and backup host machines are configured to store state information for the communication channel 616. Accordingly, the primary host machine 620 is a head of the chain RC 650 and the backup host machine 630 is the tail of the chain 650. The state information stored within the primary host machine 620 is replicated within the backup host machine 630. Specifically, the RS 622 may forward any change in the state information to the RS 632 of the backup host machine 630. (The steps for replication are described below with reference to FIG. 10). The RS 632 may store the state information within the replicated state information (RSI) cache 634.

The state information for the communication channel 616 may include multiple types of state information involving the communication channel. The state information cache 624 may comprise of a table of state information which may include a specific entry for a sequence number 701 of a packet received at the host machine 620, information for encryption and decryption keys 702 for the communication channel, Border Gateway Protocol (BGP) state information 703, and Internet Key Exchange (IKE) state information 704 for the communicational channel 616.

In certain scenarios, state information such as a sequence number for the packet may be frequently updated as every time a packet is received at the primary host machine, the sequence number for the packet may be different which suggests a change in the state information. For example, every time a packet is received at the primary host machine 620, a sequence number within the state information for the packet is incremented. The replication system 622 may identify the incremented number for packet as change in state information and communicate this change to its immediate successor (e.g., 630) within the chain.

In other scenarios, certain state information such as encryption and decryption keys for the communication channel may be updated on infrequent basis such as when a communication channel connection needs to be established between two endpoints or when keys need to be renegotiated between endpoints which is typically every 20 minutes to an hour. The state that's involved in negotiations of the communication channel is called the IKE state. There is an IKE daemon on each side that negotiates all the parameters for the IPSEC SAs, so there's state associated with that which also needs to be replicated. Similar to state associated with cryptographic keys, the IKE state is not changed frequently.

The replicated state information cache 634 may include a copy of the state information of the state information cache 624, which is depicted as sequence number 706 of a packet received at the host machine 620, information for encryption and decryption keys 707 for the communication channel, Border Gateway Protocol (BGP) state information 708, and Internet Key Exchange (IKE) state information 709.

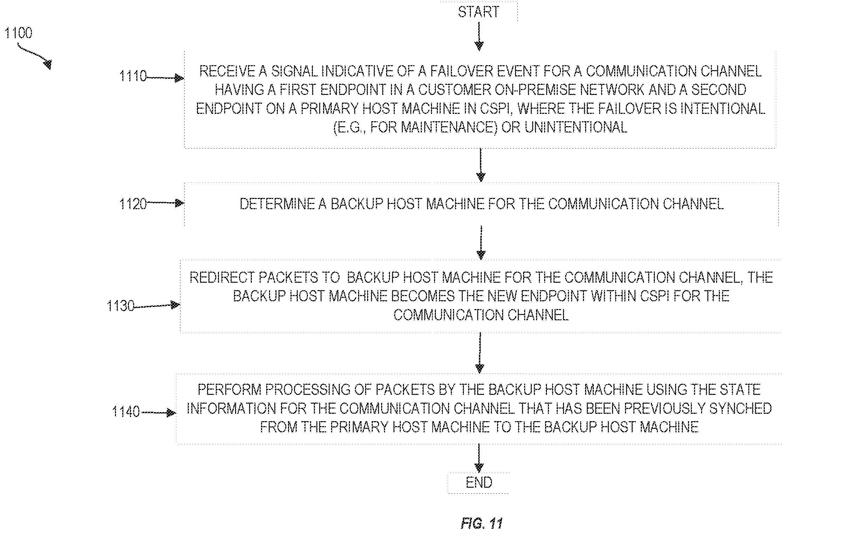

In an example embodiment, upon the failover within the primary host machine 620, the backup host machine that is the immediate successor of the primary host machine within the RC 650 may become the head of the chain. Within the replication chain 650, if the primary host machine 620 fails and the head of the replication chain (RC 650) may need to be reconfigured, access to the chain may be blocked until the new head is reconfigured. In some scenarios, all replication systems within other host machines within the chain may find out about the change of the head eventually. In other scenarios, the replication system 622 within primary host machine 620 may only be aware of the immediate successor that is backup for the host machine without having any additional knowledge about chain topology and all the nodes within the chain. The failover events are further discussed in FIG. 11 description.

The replication system 622 may support get and put operations (to support replication requests from packet processors) for replicating and managing the communication channel-related state information. Replication system 622 may run on the same machine (e.g., 620) as a packet processor or on a different machine than the packet processor. The RS 622 may serve as a gateway to the other host machines within the RC 650. In an example embodiment, state information table entries within the state information cache 624 may be manipulated by the RS 622 using the three basic operations: 1) read operation - replication system may look up a specific key entry and return the associated value, 2) write operation - replication system may write an entry to the cache, and 3) delete operation - replication system may delete an entry in the cache.

In an example embodiment, to provide high throughput for operations in replication system, if an operation request (e.g., a request for storing and replicating a change in the state information for the communication channel) has been successfully submitted to replication system, replication system may provide a response to the request immediately or at a later time depending on the type of a mode of operation (further described with reference to FIG. 10). While a previous request for replication is being processed by the replication system, the packet processor can submit a new request. Accordingly, the replication system may be fully pipelined with replication requests.

In an example embodiment, for operations which require replication system 622 forwarding the request for replicating state information to another replication system 632 within the backup host machine (e.g., 630), the replication system 622 may put the request on its own work queue and send it to its peer replication system 632 to perform operations. Replication chain's peer to peer communication may be done over standard network protocol via messages. In an example embodiment, TCP may be used for the replication system peer to peer communication as it guarantees the order of communication.

In an example embodiment, a packet processor or state monitoring system may request that entries managed by a replication system expire after a fixed amount of time. If such an expiration operation is requested, the head replication system (e.g., 622) may store the expiration time and delete the mapping if and when its expiration time is reached. In the above embodiment, if the entry is also cached on the other machines, the head may first have the other machines to delete the entry before deleting the expired entry from its own cache. In an alternative embodiment, packet processors or state monitoring systems may request for a notification when an entry is expiring. Accordingly, the replication system of the head may provide notification of expiring entry to the processor to allow the client to perform additional cleanup when an entry is expired.

In an example embodiment, the replication system 622 may provide support to cache entries in a "shared" or "read-only" mode within state information cache 624. In an example embodiment, the entry involving communication channel-related state information may be cached in form of key-value pair within a key-value database (cache 624) associated with the head or primary host machine 620. In an example embodiment, if the state of communication channel is updated, the replication system may need to update an entry within itself (e.g., in-memory key-value storage), and then cause the others replication systems within the chain to update the entry. In the above embodiment, writing this information into the chain ensures that the data entries will be retained in case of the failure of the head.

In an example embodiment, replication system 622 may cache the network state using shared caching. In the shared caching setting, multiple replication systems (e.g., 622 and 632) within the RC 650 may hold copies of the same entry, but only use them for reading. Here, only the replication system 622 within the primary host machine or head may be able to edit the entry for the state information. The head of RC 650 is responsible for managing and replicating a state information and passing the state information to other host machines within the chain (RC 650). Accordingly, the head may be the only member allowed to propose changes related to the state information within the replication chain 650.

In an example embodiment, if an entry needs to be updated, then replication system 622 of the primary host machine 620 may request the backup host machines (e.g., 630) caching a different state information to invalidate the entries involving the state information before replicating the update within the replication chain. In an example embodiment, all host machines within replication chain may not be aware of configuration of every chain within the infrastructure but only their immediate successor. Accordingly, all host machines may know where to send their requests for replication. In an alternative embodiment, the host machines may retrieve information about the immediate successor from a disk-backed data storage.

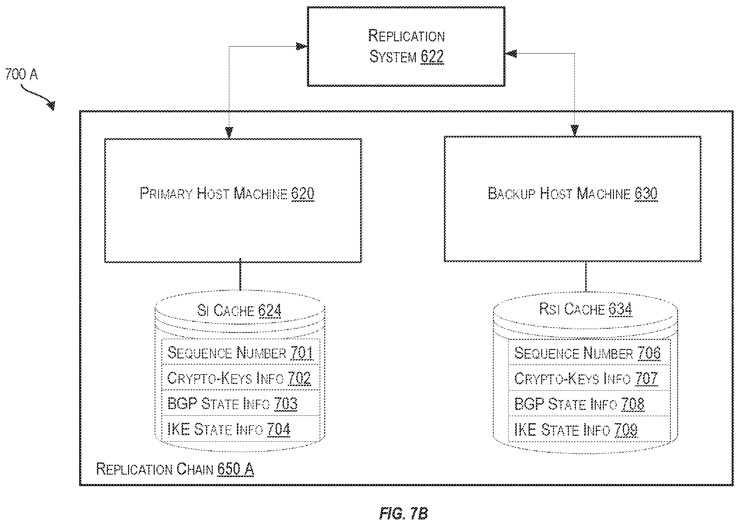

It must be appreciated that the configuration depicted in FIG. 7A is not intended to unduly limit the scope of claimed embodiments. Many variations, alternatives, and modifications are possible. For instance, FIG. 7B depicts a centralized configuration of a replication system 622. Specifically, the replication system 622 may be a centralized entity that controls/manages replication operations associated with the host machines included in the replication chain 650. The replication system 622 may replicate state information data and store the same in respective caches associated with the host machines (i.e., primary host machine 620, backup host machine 630 etc.) included in the replication chain 650.

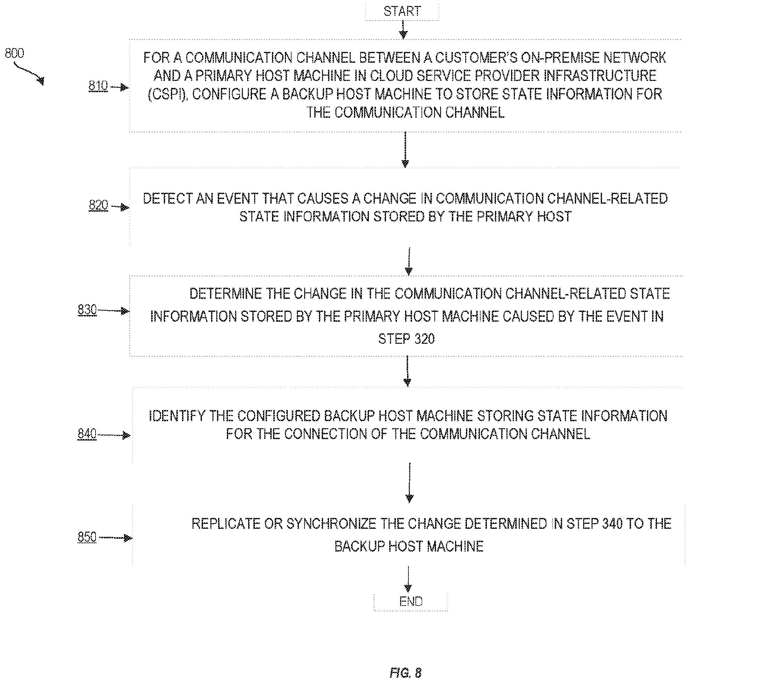

FIG. 8 depicts a simplified flowchart 800 depicting a method for replicating communication channel-related state information to a backup host machine, according to certain embodiments. The processing depicted in FIG. 8 may be implemented in software (e.g., code, instructions, program) executed by one or more processing units (e.g., processors, cores) of the respective systems, using hardware, or combinations thereof. The software may be stored on a non-transitory storage medium (e.g., on a memory device). The method presented in FIG. 8 and described below is intended to be illustrative and non-limiting. Although FIG. 8 depicts the various processing steps occurring in a particular sequence or order, this is not intended to be limiting. In certain alternative embodiments, the processing may be performed in some different order or some steps may also be performed in parallel. In certain embodiments, the steps depicted in FIG. 8 may be performed by one or more components depicted in FIGS. 7A and FIG. 7B.

In an example embodiment, as discussed in FIG. 6 and FIGS. 7A and 7B, for securely processing packets between a CPE 608 within a customer's on-premise network and a primary host machine 620 within the cloud service provider infrastructure (CSPI) 660, a communication channel 616 is setup.

In step 810, a primary host machine and a backup host machine(s) for a communication channel are configured. To configure the backup host machine(s) 630 for the communication channel 616, RS 622 within the primary host machine may communicate to a Disk-Backed Data Storage to identify a backup host machine for the communication channel 616. Accordingly, in some implementations, the primary host machine 620 may configure and allocate backup host machine 630 for storing the state information for communication channel 616 during a startup or bootstrap processing of the primary host machine 620.

In step 820, an event that causes a change in state information for the communication channel is detected. Specifically, within the primary host machine 620, a processor or the replication system 622 may detect an event that causes change in the state information for the communication channel that is stored within state information cache 624. For example, if a packet is received at the processor within the primary host machine 620, the packet may have a sequence number that is different from previously stored sequence number, and accordingly, receiving a packet is an event that causes a change in the state information. Similarly, if SA i.e., the security association between the primary host machine 620 of the communication channel 616 and the CPE 608 needs to be renegotiated i.e., SA between the two endpoints, the endpoint e.g., primary host machine 620 may receive a packet with encryption and decryption keys for renegotiations. The packets involving these crypto keys are also a type of event that causes change in the state information for the communication channel 616.

In step 830, a change in the communication channel-related state information that is stored by the primary host machine is determined. Specifically, in some implementations, after an event is detected in step 820, the replication system 622 determines the change in the state information after analyzing a packet received at the primary host machine 620 by comparing the state information from the packet with the state information stored within the cache 624. For example, the replication system 622 may examine packets received at the primary host machine 620. The replication system 622 may hash the header of a received packet at the primary host machine 620. The replication system 622 may identify a sequence number of the packet from the hash of the header of the packet. The header of the packet may include sequence or identification of the packet. When a new packet is received at the host machine 620, it would have a different sequence number than the previously received packet.

In some implementations, as discussed previously with regard to FIG. 7A, a packet processor or monitoring system may receive and analyze the packet directed to the primary host machine 620 that is related to state information for the communication channel 616. Once the change in the state information is identified by the packet processor or the monitoring system, the processor may request the replication system 622 to update and replicate the change in state information within the backup host machine 630.

In step 840, a backup host machine for storing the state information for the communication channel is identified. Specifically, the replication system 622 may query the disk-backed data storage to identify the backup host machine. Alternatively, the replication system 622 may retrieve the backup host machine information from the configuration data of the primary host machine 620. Specifically, the replication system 622 may retrieve an IP address of a replication system (e.g., 632) within the backup host machine (e.g., 630).

In step 850, the change in state information for the communication is replicated to the identified backup host machine. Specifically, the replication system 622 may communicate the change in the state information to the replication system 632 within the backup host machine 630. The replication system 632 may store the change in the state information received from the replication system 622 into the replication state information cache 634. The replication system 632 may drop or invalidate the previously stored entry for the state information prior to storing the change in the state information within the cache 634.

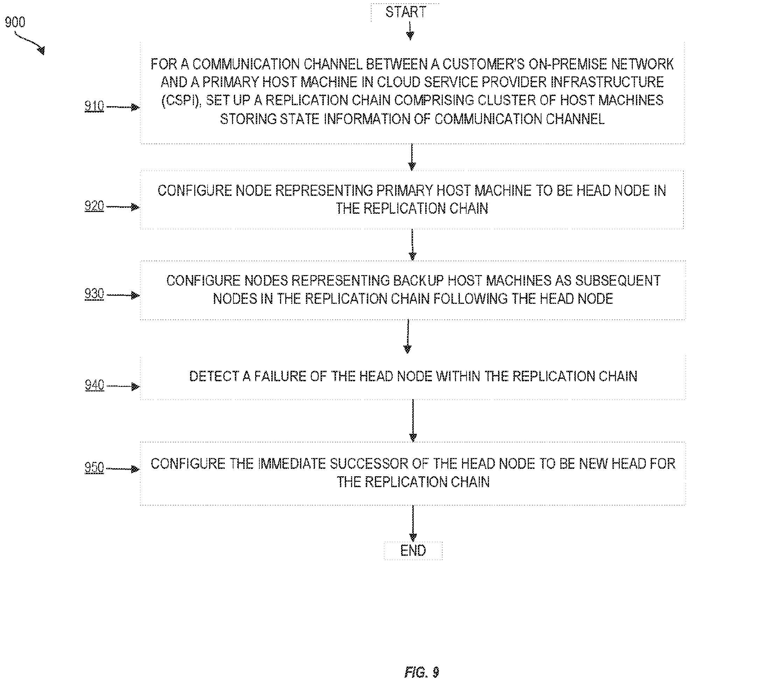

FIG. 9 depicts a flowchart 900 depicting replication of communication channel-related state information by a replication channel, according to certain embodiments. The processing depicted in FIG. 9 may be implemented in software (e.g., code, instructions, program) executed by one or more processing units (e.g., processors, cores) of the respective systems, using hardware, or combinations thereof. The software may be stored on a non-transitory storage medium (e.g., on a memory device). The method presented in FIG. 9 and described below is intended to be illustrative and non-limiting. Although FIG. 9 depicts the various processing steps occurring in a particular sequence or order, this is not intended to be limiting.

In certain alternative embodiments, the processing may be performed in some different order or some steps may also be performed in parallel. By some embodiments, the processing steps depicted in FIG. 9 may be performed by one or more components (e.g., replication system) within host machines depicted in FIG. 6 and FIGS. 7A and 7B. Specifically, FIG. 9 depicts a flowchart depicting steps performed by components (within the host machine receiving packet) to replicate communication channel-related state information within the replication chain according to certain embodiments. In an example embodiment, for securely processing packets between a CPE 608 within a customer's on-premise network 602 and a primary host machine 620 within the cloud service provider infrastructure (CSPI) 660, a communication channel 616 is setup, as depicted in FIG. 6.

In step 910, for a communication channel between a customer's on-premise network and a customer's virtual network hosted by the CSPI, a replication chain is configured for storing state information associated with the communication channel. The replication chain may include a cluster of host machines for storing communication channel-related state information. Within the replication chain, the host machines are linearly ordered to form a chain (e.g., RC 650) with a primary host machine 620 of the chain designated as a "head" or a "master" of the chain and rest of the nodes of the chain are designated as backup host machines for the communication channel 616.

In step 920, within the replication chain, a node corresponding to the primary host machine is designated to be the head node of the chain. Specifically, for a communication channel 616 when one endpoint of the channel is a host machine 620, which receives traffic from the second endpoint (CPE 608) on the other side of the communication channel 616, the host machine 620 is designated to be the primary host machine for the communication channel 616. Accordingly, within the replication chain, the primary host machine for the communication channel is designated as the head node of the chain.

In step 930, within the replication chain, the rest of the node(s) i.e., the backup host machine(s) are configured as subsequent node(s) to the head within the replication chain. For a communication channel 616, if a host machine within CSPI 660 does not primarily receive traffic for the communication channel 616 but is assigned to store state information for the communication channel, then the host machine is designated as a backup host machine 630 for the communication channel 616. In some implementations, the replication chain may include a single backup host machine 630 for the primary host machine 620, as shown in FIG. 6. In other implementations, multiple host machines may be designated as backup host machines for the communicational channel 616.

In step 940, a failure of a head node within the replication chain is detected. A mechanism involving chain log replication protocol may control and manage the membership within the chain. The mechanism may further monitor the health of the head of the chain for any failures.

In step 950, upon detecting a failure of the head node within the replication chain, an immediate successor of the head within the chain is configured to be the new head for the chain. Accordingly, the immediate successor (e.g., 630) may be promoted to head. In some scenarios, when the primary host machine comes back from the failure mode, it becomes the head of the chain again. In other scenarios, when the primary host machine comes back from failure mode, it joins the chain at the end and may get promoted as other hosts are taken down of the chain. In example implementations, there may be multiple chains involving multiple communication channels, and each node can be the head of more than one chain. Specifically, each chain can handle different sets of SAs, wherein a node can be the head of one chain and a successor in another chain.

FIG. 10 depicts a flowchart 1000 depicting detailed processing performed for replicating communication channel-related state information by a primary host machine, according to certain embodiments. Specifically, the flowchart presents steps performed by the head host machine to replicate a network state information when it receives a packet for a particular flow.

In step 1010, an event that causes a change in state information for the communication channel is detected. Specifically, within the primary host machine 620, the replication system 622 may detect an event that causes change in the state information of the communication channel that is stored within state information cache 624. For example, the replication system 622 may analyze packets received at the primary host machine 620. The replication system 622 may hash the header of a received packet at the primary host machine 620. The replication system 622 may identify a sequence number of the packet from the hash of the header of the packet. The header of the first packet may be a standard five-tuple packet header having information about a source IP address, a source port, a destination IP address, a destination port, and a layer 4 protocol (e.g., TCP, UDP, etc.). The header of the packet also includes a sequence number or identification number i.e., an identifier associated with the packet. When a new packet is received at the host machine 620, it would have a different sequence number than the previously received packet.

In step 1015, a change in the communication channel-related state information that is stored by the primary host machine is determined. Specifically, after an event is detected in step 1010, the replication system 622 determines the change in the state information after analyzing a packet received at the primary host machine 620.

In step 1017, the determined change in the communication channel-related state information is stored within the local cache of primary host machine 620. Specifically, a processor within the host machine 620 may send the change to the replication system 622. The replication system 622 may store the change in the state information within the state information cache 624.

In step 1020, after the replication system 622 stores the state information for the communication channel, the replication system 622 determines a mode for replicating the state information within the backup host machines for the communication channel 616. By some embodiments, the mode of operation for replicating state information can be one of a safe mode of operation and a best-effort mode of operation. The mode of operation may be determined based on one or more conditions. For example, if a maintenance of the primary host machine 620 is scheduled within a threshold amount of time after determining a change in the state information for the communication channel 616, the replication system 622 may determine that the mode of operation for replication is a safe mode. Similarly, if the replication system 622 determines that the change in state information is related to establishing communication for the communication channel 616 then the mode of operation would be a safe mode of replicating state information. Specifically, as will be described next, the safe mode of operation guarantees a continual and successful operation of the communication channel e.g., in a scenario when the host machine may be in an offline state for maintenance purposes.

In step 1030, upon determining that the replication for the change in communication channel-related state information is to be performed in safe mode, the processing of packets over the primary host machine 620 is suspended. Specifically, the replication system 622 may alert the packet processor to suspend processing packets temporarily.

In step 1035, once the host machine 620 suspends processing packets, the replication system 622 may identify the replication chain configured for the communication channel 616. The replication chain may query a disk-backed data storage system to identify a replication chain and one or more backup host machines within the replication chain for the communication channel 616. In some scenarios, the information about the replication chain and one or more backup host machines for the communication channel 616 may be available and configured in the primary host machine 620 during startup.

In step 1040, after identifying the replication chain for the communication channel 616, the one or more backup host machines for the communication channel 616 are identified. Specifically, the replication system 622 within the primary host 620 may identify another replication system i.e., a replication system associated with a backup host machine (for the communication channel 616).

In step 1045, the changed communication channel-related state information is replicated within backup host machines. Specifically, the replication system 622 within the primary host machine 620 may communicate the changed communication channel-related state information to the backup host machine that is a subsequent node of the replication chain of the primary host machine 620. The subsequent node represented as a backup host machine may cause the next backup host machine within the replication chain to replicate the state information. Accordingly, each of the backup host machines within the replication chain replicates the change in the state information. Specifically, the change in state information is replicated in a sequential manner at each host machine in the replication chain. Every replication system within the chain may cache this entry i.e., the changed state information within its local cache. Once the entry has been replicated between all host machines in the chain, the head host machine may receive confirmation or notification from the tail host machine of the chain.

By one embodiment, in the above described mechanism of replication of the change in state information to be performed in the host machines of the replication chain, the head host machine may access disk-backed data storage to identify the peer host machines within the replication chain. In the above embodiment, the head host machine or a processor within the host machine may send the insert entry message with entry information to the immediate successor host machine or peer host machine from the chain, where the peer host machine may cache the entry within its local cache and send a similar insert entry message to the next host machine in the replication chain for replication.

In step 1050, the head host machine receives an acknowledgement message indicating that the state information has been replicated by backup host machines. Specifically, the replication system 622 within the head host machine receives an acknowledgement message from the tail host machine in the replication chain indicating that the corresponding change in state information of the communication channel has been incorporated in all intermediate host machines. It must be appreciated that the acknowledgement message may be transmitted from the tail host machine to the head host machine using any suitable communication protocol utilized for communication between the host machines.

For instance, according to some embodiments, the replication chain performs replication within backup host machines using log structured mechanism (e.g., chain log replication protocol). Such a type of replication protocol under the safe mode operation, provides for an option to enforce safety i.e., by suspending the processing of the packet until it is guaranteed that the replication of the change in state information has occurred within all backup host machines.

By some embodiments, the safe mode may have different variations of implementation. For instance, in some implementations, in the safe mode of operation, it is not necessary to suspend packets until the state is absolutely synchronized, but as long as the state changes are synchronized within a certain window. The window may be defined in terms of number of packets. For example, the window may have a size of W = 3 packets. This mode of operation may be referred to as a relaxed safe mode of operation. The primary host machine may continue processing of packets before all state changes have been replicated for the entire window. According to some embodiments, another operational mode for replicating state information may be a best-effort mode. In this mode of operation and similar to the relaxed safe mode of operation, the channel information is replicated without halting or suspending packet processing operations. However, a difference between the best-effort mode of operation and the relaxed safe mode of operation is that in the best-effort mode the size of the window is extremely large i.e., an infinite size window. In other words, the window size is not a constraint in the packet processing in the best-effort mode of operation.

In step 1055, after receiving acknowledgement that the state information has been replicated by the backup host machines for the communication channel 616, the processing of packets over the communication channel is resumed (e.g., in the safe mode).

Returning to step 1020, if replication is determined not to be performed in the safe mode e.g., replication is performed in the best-effort mode, then suspension of processing packets is not required. Upon determining that the replication is not to be performed in the safe mode, the replication of state information is essentially performed using the above described steps 1035, 1040, and 1045 without suspending processing of packets.

It must be noted that if the replication of the state information cannot occur fast enough (e.g., replication rate is not able to keep up with the rate at which packets are being received at the primary host machine i.e., arrival rate of packets), one possible consequence is that in the event of a failover i.e., when primary host machine has failed and the backup host is to be made the new head of the replication chain, a few packets may be dropped when the communication channel is re-established with the backup host as the new head. Such a scenario may occur in the best-effort mode of data replication. However, it must be appreciated that such a failover event may not have a security impact on packet processing because integrity of customer data isn't compromised.

In other words, if the packet sequence is not correctly synched up, then the packets may be dropped. If there is some blockage to the replication, it means that if there is a failover then the successor, who's supposed to take over, will have a sequence number that is stale, and it will not be able to pick up the connection (in a completely successful manner) because the packets that it is seeing are out of sync. The successor may interpret such situations as being a replay attack and may respond by dropping some packets.

In certain scenarios, while dealing with packet sequence numbers for the communication channel-related state information, the replication is performed without using the safe mode e.g., a best-effort mode or relaxed safe mode. In some implementations, if a replication of a high volume stream of state changes is lagging by a certain amount e.g. a certain number of packets, then upon a failover event, the backup host machine may predict how far it needs to jump (or overshoot the sequence number) and in doing so it may discard packets that fall behind the window. The protocol may just assume that such packets (i.e., dropped packets) are missing and the backup host machine can update its packet counter. So, it is always based on the highest authenticated sequence number that it sees. Thus, in the case of a relaxed safe mode of operation, even if replication of sequence number state information for the communication is lagging or gets out of sync, the backup host machines during failover can jump forward by predicted amount e.g. a certain number of packets and get back within window. In doing so, the originally established communication channel can continue to operate, with the back-up host as the new head of the replication chain.

Accordingly, with a safe mode option, the replication operation is performed wherein the processing of packets is suspended until replication has completed. For instance, safe mode can be used when connection is being setup by transmitting encryption/decryption information between endpoints. However, after connection has been setup, the replication may be performed out of safe mode i.e., relaxed safe mode or best effort mode. Furthermore, the replication mode may be transitioned back to safe mode when state changes involve changes within cryptographic state information. The safe mode ensures continuous/complete replication of the state information within the backup host machines, whereas the best-effort mode ensures that a best effort is made to replicate the state information and process packets during the primary host machine failover scenario.

FIG. 11 illustrates a flowchart 1100 depicting steps performed to handle packet processing during a failover of primary host machine, according to certain embodiments.

In step 1110, a data plane including the primary host machine receives a signal indicating that the primary host machine is unavailable. The unavailability of the primary host machine may be due to intentional or unintentional reasons. For example, the primary host may be intentionally brought down due to a maintenance activity. In other cases, the primary host machine may be down due to a sudden failover event within the host machine, which would be unintentional failover.

In step 1120, the backup host machine for the communication channel may be identified. Specifically, the data plane or a processor within the VCN hosted on the CSPI, identifies the backup host machine for the communication channel by inquiring about the communication channel to a disk-backed data storage. In some implementations, the backup host machine may be identified and configured within the data plane.

In step 1130, packets processed by the communication channel may be directed to the identified backup host machine. Specifically, the data plane of the VCN may change destination IP address of the packet to be the IP address of the backup host machine. In this instance, the endpoint (CPE 608) on customer's end is still sending packets to the IP address of the primary host machine but the packets are diverted to the IP address of the backup host machine by the data plane processor.

In step 1140, the processing of packets is performed by the backup host machines using the state information for the communication channel that has been previously synchronized from the primary host machine to the backup host machine. As discussed, in a failover involving maintenance activity, where the primary host machine is scheduled to go offline, the replication under safe mode (as discussed in FIG. 10) would ensure that everything is synchronized up. Accordingly, replication under safe mode can guarantee successful packet processing by backup host machine when primary host machine is down for maintenance.

For scenarios with unexpected failovers, while it is not guaranteed that all state information has been synchronized, with the replication method (as discussed in FIG. 10), the probability of successfully handling failover scenario without jeopardizing security of packets is still high. In the worst case, the parameters of the connection may be lost and parameters for communication channel may need to be renegotiated. By aspects of the present disclosure, using the single highly available tunnel, provisions for allocating an endpoint of tunnel from a host that we want to patch to another host, without having to take down the tunnel.

### Example Cloud Infrastructure embodiment

As noted above, infrastructure as a service (IaaS) is one particular type of cloud computing. IaaS can be configured to provide virtualized computing resources over a public network (e.g., the Internet). In an IaaS model, a cloud computing provider can host the infrastructure components (e.g., servers, storage devices, network nodes (e.g., hardware), deployment software, platform virtualization (e.g., a hypervisor layer), or the like). In some cases, an IaaS provider may also supply a variety of services to accompany those infrastructure components (e.g., billing, monitoring, logging, security, load balancing and clustering, etc.). Thus, as these services may be policy-driven, IaaS users may be able to implement policies to drive load balancing to maintain application availability and performance.

In some instances, IaaS customers may access resources and services through a wide area network (WAN), such as the Internet, and can use the cloud provider's services to install the remaining elements of an application stack. For example, the user can log in to the IaaS platform to create virtual machines (VMs), install operating systems (OSs) on each VM, deploy middleware such as databases, create storage buckets for workloads and backups, and even install enterprise software into that VM. Customers can then use the provider's services to perform various functions, including balancing network traffic, troubleshooting application issues, monitoring performance, managing disaster recovery, etc.

In most cases, a cloud computing model will require the participation of a cloud provider. The cloud provider may, but need not be, a third-party service that specializes in providing (e.g., offering, renting, selling) IaaS. An entity might also opt to deploy a private cloud, becoming its own provider of infrastructure services.

In some examples, IaaS deployment is the process of putting a new application, or a new version of an application, onto a prepared application server or the like. It may also include the process of preparing the server (e.g., installing libraries, daemons, etc.). This is often managed by the cloud provider, below the hypervisor layer (e.g., the servers, storage, network hardware, and virtualization). Thus, the customer may be responsible for handling (OS), middleware, and/or application deployment (e.g., on self-service virtual machines (e.g., that can be spun up on demand) or the like.

In some examples, IaaS provisioning may refer to acquiring computers or virtual hosts for use, and even installing needed libraries or services on them. In most cases, deployment does not include provisioning, and the provisioning may need to be performed first.

In some cases, there are two different challenges for IaaS provisioning. First, there is the initial challenge of provisioning the initial set of infrastructure before anything is running. Second, there is the challenge of evolving the existing infrastructure (e.g., adding new services, changing services, removing services, etc.) once everything has been provisioned. In some cases, these two challenges may be addressed by enabling the configuration of the infrastructure to be defined declaratively. In other words, the infrastructure (e.g., what components are needed and how they interact) can be defined by one or more configuration files. Thus, the overall topology of the infrastructure (e.g., what resources depend on which, and how they each work together) can be described declaratively. In some instances, once the topology is defined, a workflow can be generated that creates and/or manages the different components described in the configuration files.

In some examples, an infrastructure may have many interconnected elements. For example, there may be one or more virtual private clouds (VPCs) (e.g., a potentially on-demand pool of configurable and/or shared computing resources), also known as a core network. In some examples, there may also be one or more security group rules provisioned to define how the security of the network will be set up and one or more virtual machines (VMs). Other infrastructure elements may also be provisioned, such as a load balancer, a database, or the like. As more and more infrastructure elements are desired and/or added, the infrastructure may incrementally evolve.

In some instances, continuous deployment techniques may be employed to enable deployment of infrastructure code across various virtual computing environments. Additionally, the described techniques can enable infrastructure management within these environments. In some examples, service teams can write code that is desired to be deployed to one or more, but often many, different production environments (e.g., across various different geographic locations, sometimes spanning the entire world). However, in some examples, the infrastructure on which the code will be deployed must first be set up. In some instances, the provisioning can be done manually, a provisioning tool may be utilized to provision the resources, and/or deployment tools may be utilized to deploy the code once the infrastructure is provisioned.

FIG. 12 is a block diagram 1200 illustrating an example pattern of an IaaS architecture, according to at least one embodiment. Service operators 1202 can be communicatively coupled to a secure host tenancy 1204 that can include a virtual cloud network (VCN) 1206 and a secure host subnet 1208. In some examples, the service operators 1202 may be using one or more client computing devices, which may be portable handheld devices (e.g., an iPhone^{®}, cellular telephone, an iPad^{®}, computing tablet, a personal digital assistant (PDA)) or wearable devices (e.g., a Google Glass^{®} head mounted display), running software such as Microsoft Windows Mobile^{®}, and/or a variety of mobile operating systems such as iOS, Windows Phone, Android, BlackBerry 8, Palm OS, and the like, and being Internet, e-mail, short message service (SMS), Blackberry^{®}, or other communication protocol enabled. Alternatively, the client computing devices can be general purpose personal computers including, by way of example, personal computers and/or laptop computers running various versions of Microsoft Windows^{®}, Apple Macintosh^{®}, and/or Linux operating systems. The client computing devices can be workstation computers running any of a variety of commercially-available UNIX^{®} or UNIX-like operating systems, including without limitation the variety of GNU/Linux operating systems, such as for example, Google Chrome OS. Alternatively, or in addition, client computing devices may be any other electronic device, such as a thin-client computer, an Internet-enabled gaming system (e.g., a Microsoft Xbox gaming console with or without a Kinect^{®} gesture input device), and/or a personal messaging device, capable of communicating over a network that can access the VCN 1206 and/or the Internet.

The VCN 1206 can include a local peering gateway (LPG) 1210 that can be communicatively coupled to a secure shell (SSH) VCN 1212 via an LPG 1210 contained in the SSH VCN 1212. The SSH VCN 1212 can include an SSH subnet 1214, and the SSH VCN 1212 can be communicatively coupled to a control plane VCN 1216 via the LPG 1210 contained in the control plane VCN 1216. Also, the SSH VCN 1212 can be communicatively coupled to a data plane VCN 1218 via an LPG 1210. The control plane VCN 1216 and the data plane VCN 1218 can be contained in a service tenancy 1219 that can be owned and/or operated by the IaaS provider.

The control plane VCN 1216 can include a control plane demilitarized zone (DMZ) tier 1220 that acts as a perimeter network (e.g., portions of a corporate network between the corporate intranet and external networks). The DMZ-based servers may have restricted responsibilities and help keep security breaches contained. Additionally, the DMZ tier 1220 can include one or more load balancer (LB) subnet(s) 1222, a control plane app tier 1224 that can include app subnet(s) 1226, a control plane data tier 1228 that can include database (DB) subnet(s) 1230 (e.g., frontend DB subnet(s) and/or backend DB subnet(s)). The LB subnet(s) 1222 contained in the control plane DMZ tier 1220 can be communicatively coupled to the app subnet(s) 1226 contained in the control plane app tier 1224 and an Internet gateway 1234 that can be contained in the control plane VCN 1216, and the app subnet(s) 1226 can be communicatively coupled to the DB subnet(s) 1230 contained in the control plane data tier 1228 and a service gateway 1236 and a network address translation (NAT) gateway 1238. The control plane VCN 1216 can include the service gateway 1236 and the NAT gateway 1238.

The control plane VCN 1216 can include a data plane mirror app tier 1240 that can include app subnet(s) 1226. The app subnet(s) 1226 contained in the data plane mirror app tier 1240 can include a virtual network interface controller (VNIC) 1242 that can execute a compute instance 1244. The compute instance 1244 can communicatively couple the app subnet(s) 1226 of the data plane mirror app tier 1240 to app subnet(s) 1226 that can be contained in a data plane app tier 1246.

The data plane VCN 1218 can include the data plane app tier 1246, a data plane DMZ tier 1248, and a data plane data tier 1250. The data plane DMZ tier 1248 can include LB subnet(s) 1222 that can be communicatively coupled to the app subnet(s) 1226 of the data plane app tier 1246 and the Internet gateway 1234 of the data plane VCN 1218. The app subnet(s) 1226 can be communicatively coupled to the service gateway 1236 of the data plane VCN 1218 and the NAT gateway 1238 of the data plane VCN 1218. The data plane data tier 1250 can also include the DB subnet(s) 1230 that can be communicatively coupled to the app subnet(s) 1226 of the data plane app tier 1246.

The Internet gateway 1234 of the control plane VCN 1216 and of the data plane VCN 1218 can be communicatively coupled to a metadata management service 1252 that can be communicatively coupled to public Internet 1254. Public Internet 1254 can be communicatively coupled to the NAT gateway 1238 of the control plane VCN 1216 and of the data plane VCN 1218. The service gateway 1236 of the control plane VCN 1216 and of the data plane VCN 1218 can be communicatively couple to cloud services 1256.

In some examples, the service gateway 1236 of the control plane VCN 1216 or of the data plane VCN 1218 can make application programming interface (API) calls to cloud services 1256 without going through public Internet 1254. The API calls to cloud services 1256 from the service gateway 1236 can be one-way: the service gateway 1236 can make API calls to cloud services 1256, and cloud services 1256 can send requested data to the service gateway 1236. But, cloud services 1256 may not initiate API calls to the service gateway 1236.

In some examples, the secure host tenancy 1204 can be directly connected to the service tenancy 1219, which may be otherwise isolated. The secure host subnet 1208 can communicate with the SSH subnet 1214 through an LPG 1210 that may enable two-way communication over an otherwise isolated system. Connecting the secure host subnet 1208 to the SSH subnet 1214 may give the secure host subnet 1208 access to other entities within the service tenancy 1219.

The control plane VCN 1216 may allow users of the service tenancy 1219 to set up or otherwise provision desired resources. Desired resources provisioned in the control plane VCN 1216 may be deployed or otherwise used in the data plane VCN 1218. In some examples, the control plane VCN 1216 can be isolated from the data plane VCN 1218, and the data plane mirror app tier 1240 of the control plane VCN 1216 can communicate with the data plane app tier 1246 of the data plane VCN 1218 via VNICs 1242 that can be contained in the data plane mirror app tier 1240 and the data plane app tier 1246.

In some examples, users of the system, or customers, can make requests, for example create, read, update, or delete (CRUD) operations, through public Internet 1254 that can communicate the requests to the metadata management service 1252. The metadata management service 1252 can communicate the request to the control plane VCN 1216 through the Internet gateway 1234. The request can be received by the LB subnet(s) 1222 contained in the control plane DMZ tier 1220. The LB subnet(s) 1222 may determine that the request is valid, and in response to this determination, the LB subnet(s) 1222 can transmit the request to app subnet(s) 1226 contained in the control plane app tier 1224. If the request is validated and requires a call to public Internet 1254, the call to public Internet 1254 may be transmitted to the NAT gateway 1238 that can make the call to public Internet 1254. Memory that may be desired to be stored by the request can be stored in the DB subnet(s) 1230.

In some examples, the data plane mirror app tier 1240 can facilitate direct communication between the control plane VCN 1216 and the data plane VCN 1218. For example, changes, updates, or other suitable modifications to configuration may be desired to be applied to the resources contained in the data plane VCN 1218. Via a VNIC 1242, the control plane VCN 1216 can directly communicate with, and can thereby execute the changes, updates, or other suitable modifications to configuration to, resources contained in the data plane VCN 1218.

In some embodiments, the control plane VCN 1216 and the data plane VCN 1218 can be contained in the service tenancy 1219. In this case, the user, or the customer, of the system may not own or operate either the control plane VCN 1216 or the data plane VCN 1218. Instead, the IaaS provider may own or operate the control plane VCN 1216 and the data plane VCN 1218, both of which may be contained in the service tenancy 1219. This embodiment can enable isolation of networks that may prevent users or customers from interacting with other users', or other customers', resources. Also, this embodiment may allow users or customers of the system to store databases privately without needing to rely on public Internet 1254, which may not have a desired level of security, for storage.

In other embodiments, the LB subnet(s) 1222 contained in the control plane VCN 1216 can be configured to receive a signal from the service gateway 1236. In this embodiment, the control plane VCN 1216 and the data plane VCN 1218 may be configured to be called by a customer of the IaaS provider without calling public Internet 1254. Customers of the IaaS provider may desire this embodiment since database(s) that the customers use may be controlled by the IaaS provider and may be stored on the service tenancy 1219, which may be isolated from public Internet 1254.

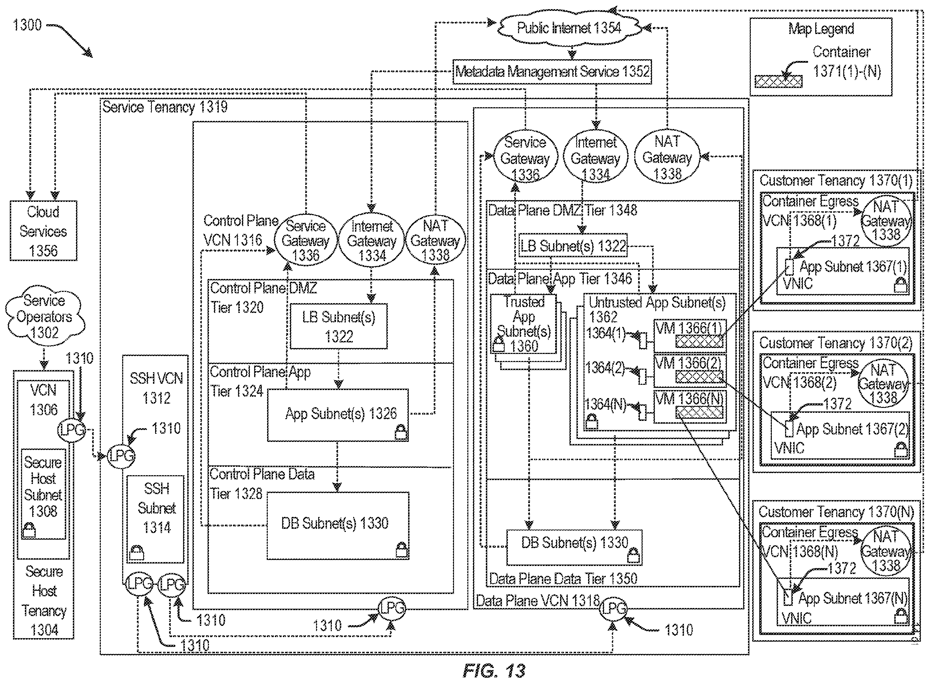

FIG. 13 is a block diagram 1300 illustrating another example pattern of an IaaS architecture, according to at least one embodiment. Service operators 1302 (e.g. service operators 1202 of FIG. 12) can be communicatively coupled to a secure host tenancy 1304 (e.g. the secure host tenancy 1204 of FIG. 12) that can include a virtual cloud network (VCN) 1306 (e.g. the VCN 1206 of FIG. 12) and a secure host subnet 1308 (e.g. the secure host subnet 1208 of FIG. 12). The VCN 1306 can include a local peering gateway (LPG) 1310 (e.g. the LPG 1210 of FIG. 12) that can be communicatively coupled to a secure shell (SSH) VCN 1312 (e.g. the SSH VCN 1212 of FIG. 12) via an LPG 1310 contained in the SSH VCN 1312. The SSH VCN 1312 can include an SSH subnet 1314 (e.g. the SSH subnet 1214 of FIG. 12), and the SSH VCN 1312 can be communicatively coupled to a control plane VCN 1316 (e.g. the control plane VCN 1216 of FIG. 12) via an LPG 1310 contained in the control plane VCN 1316. The control plane VCN 1316 can be contained in a service tenancy 1319 (e.g. the service tenancy 1219 of FIG. 12), and the data plane VCN 1318 (e.g. the data plane VCN 1218 of FIG. 12) can be contained in a customer tenancy 1321 that may be owned or operated by users, or customers, of the system.

The control plane VCN 1316 can include a control plane DMZ tier 1320 (e.g. the control plane DMZ tier 1220 of FIG. 12) that can include LB subnet(s) 1322 (e.g. LB subnet(s) 1222 of FIG. 12), a control plane app tier 1324 (e.g. the control plane app tier 1224 of FIG. 12) that can include app subnet(s) 1326 (e.g. app subnet(s) 1226 of FIG. 12), a control plane data tier 1328 (e.g. the control plane data tier 1228 of FIG. 12) that can include database (DB) subnet(s) 1330 (e.g. similar to DB subnet(s) 1230 of FIG. 12). The LB subnet(s) 1322 contained in the control plane DMZ tier 1320 can be communicatively coupled to the app subnet(s) 1326 contained in the control plane app tier 1324 and an Internet gateway 1334 (e.g. the Internet gateway 1234 of FIG. 12) that can be contained in the control plane VCN 1316, and the app subnet(s) 1326 can be communicatively coupled to the DB subnet(s) 1330 contained in the control plane data tier 1328 and a service gateway 1336 (e.g. the service gateway of FIG. 12) and a network address translation (NAT) gateway 1338 (e.g. the NAT gateway 1238 of FIG. 12). The control plane VCN 1316 can include the service gateway 1336 and the NAT gateway 1338.

The control plane VCN 1316 can include a data plane mirror app tier 1340 (e.g. the data plane mirror app tier 1240 of FIG. 12) that can include app subnet(s) 1326. The app subnet(s) 1326 contained in the data plane mirror app tier 1340 can include a virtual network interface controller (VNIC) 1342 (e.g. the VNIC of 1242) that can execute a compute instance 1344 (e.g. similar to the compute instance 1244 of FIG. 12). The compute instance 1344 can facilitate communication between the app subnet(s) 1326 of the data plane mirror app tier 1340 and the app subnet(s) 1326 that can be contained in a data plane app tier 1346 (e.g. the data plane app tier 1246 of FIG. 12) via the VNIC 1342 contained in the data plane mirror app tier 1340 and the VNIC 1342 contained in the data plane app tier 1346.

The Internet gateway 1334 contained in the control plane VCN 1316 can be communicatively coupled to a metadata management service 1352 (e.g. the metadata management service 1252 of FIG. 12) that can be communicatively coupled to public Internet 1354 (e.g. public Internet 1254 of FIG. 12). Public Internet 1354 can be communicatively coupled to the NAT gateway 1338 contained in the control plane VCN 1316. The service gateway 1336 contained in the control plane VCN 1316 can be communicatively couple to cloud services 1356 (e.g. cloud services 1256 of FIG. 12).

In some examples, the data plane VCN 1318 can be contained in the customer tenancy 1321. In this case, the IaaS provider may provide the control plane VCN 1316 for each customer, and the IaaS provider may, for each customer, set up a unique compute instance 1344 that is contained in the service tenancy 1319. Each compute instance 1344 may allow communication between the control plane VCN 1316, contained in the service tenancy 1319, and the data plane VCN 1318 that is contained in the customer tenancy 1321. The compute instance 1344 may allow resources that are provisioned in the control plane VCN 1316 that is contained in the service tenancy 1319, to be deployed or otherwise used in the data plane VCN 1318 that is contained in the customer tenancy 1321.

In other examples, the customer of the IaaS provider may have databases that live in the customer tenancy 1321. In this example, the control plane VCN 1316 can include the data plane mirror app tier 1340 that can include app subnet(s) 1326. The data plane mirror app tier 1340 can reside in the data plane VCN 1318, but the data plane mirror app tier 1340 may not live in the data plane VCN 1318. That is, the data plane mirror app tier 1340 may have access to the customer tenancy 1321, but the data plane mirror app tier 1340 may not exist in the data plane VCN 1318 or be owned or operated by the customer of the IaaS provider. The data plane mirror app tier 1340 may be configured to make calls to the data plane VCN 1318 but may not be configured to make calls to any entity contained in the control plane VCN 1316. The customer may desire to deploy or otherwise use resources in the data plane VCN 1318 that are provisioned in the control plane VCN 1316, and the data plane mirror app tier 1340 can facilitate the desired deployment, or other usage of resources, of the customer.

In some embodiments, the customer of the IaaS provider can apply filters to the data plane VCN 1318. In this embodiment, the customer can determine what the data plane VCN 1318 can access, and the customer may restrict access to public Internet 1354 from the data plane VCN 1318. The IaaS provider may not be able to apply filters or otherwise control access of the data plane VCN 1318 to any outside networks or databases. Applying filters and controls by the customer onto the data plane VCN 1318, contained in the customer tenancy 1321, can help isolate the data plane VCN 1318 from other customers and from public Internet 1354.

In some embodiments, cloud services 1356 can be called by the service gateway 1336 to access services that may not exist on public Internet 1354, on the control plane VCN 1316, or on the data plane VCN 1318. The connection between cloud services 1356 and the control plane VCN 1316 or the data plane VCN 1318 may not be live or continuous. Cloud services 1356 may exist on a different network owned or operated by the IaaS provider. Cloud services 1356 may be configured to receive calls from the service gateway 1336 and may be configured to not receive calls from public Internet 1354. Some cloud services 1356 may be isolated from other cloud services 1356, and the control plane VCN 1316 may be isolated from cloud services 1356 that may not be in the same region as the control plane VCN 1316. For example, the control plane VCN 1316 may be located in "Region 1," and cloud service "Deployment 12," may be located in Region 1 and in "Region 2." If a call to Deployment 12 is made by the service gateway 1336 contained in the control plane VCN 1316 located in Region 1, the call may be transmitted to Deployment 12 in Region 1. In this example, the control plane VCN 1316, or Deployment 12 in Region 1, may not be communicatively coupled to, or otherwise in communication with, Deployment 12 in Region 2.

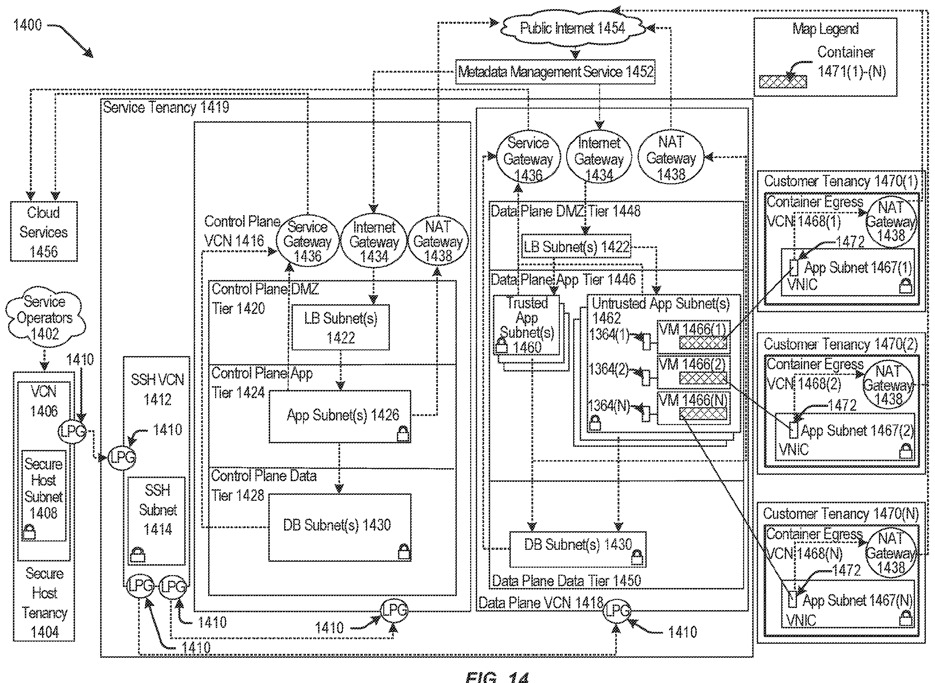

FIG. 14 is a block diagram 1400 illustrating another example pattern of an IaaS architecture, according to at least one embodiment. Service operators 1402 (e.g. service operators 1202 of FIG. 12) can be communicatively coupled to a secure host tenancy 1404 (e.g. the secure host tenancy 1204 of FIG. 12) that can include a virtual cloud network (VCN) 1406 (e.g. the VCN 1206 of FIG. 12) and a secure host subnet 1408 (e.g. the secure host subnet 1208 of FIG. 12). The VCN 1406 can include an LPG 1410 (e.g. the LPG 1210 of FIG. 12) that can be communicatively coupled to an SSH VCN 1412 (e.g. the SSH VCN 1212 of FIG. 12) via an LPG 1410 contained in the SSH VCN 1412. The SSH VCN 1412 can include an SSH subnet 1414 (e.g. the SSH subnet 1214 of FIG. 12), and the SSH VCN 1412 can be communicatively coupled to a control plane VCN 1416 (e.g. the control plane VCN 1216 of FIG. 12) via an LPG 1410 contained in the control plane VCN 1416 and to a data plane VCN 1418 (e.g. the data plane 1218 of FIG. 12) via an LPG 1410 contained in the data plane VCN 1418. The control plane VCN 1416 and the data plane VCN 1418 can be contained in a service tenancy 1419 (e.g. the service tenancy 1219 of FIG. 12).

The control plane VCN 1416 can include a control plane DMZ tier 1420 (e.g. the control plane DMZ tier 1220 of FIG. 12) that can include load balancer (LB) subnet(s) 1422 (e.g. LB subnet(s) 1222 of FIG. 12), a control plane app tier 1424 (e.g. the control plane app tier 1224 of FIG. 12) that can include app subnet(s) 1426 (e.g. similar to app subnet(s) 1226 of FIG. 12), a control plane data tier 1428 (e.g. the control plane data tier 1228 of FIG. 12) that can include DB subnet(s) 1430. The LB subnet(s) 1422 contained in the control plane DMZ tier 1420 can be communicatively coupled to the app subnet(s) 1426 contained in the control plane app tier 1424 and to an Internet gateway 1434 (e.g. the Internet gateway 1234 of FIG. 12) that can be contained in the control plane VCN 1416, and the app subnet(s) 1426 can be communicatively coupled to the DB subnet(s) 1430 contained in the control plane data tier 1428 and to a service gateway 1436 (e.g. the service gateway of FIG. 12) and a network address translation (NAT) gateway 1438 (e.g. the NAT gateway 1238 of FIG. 12). The control plane VCN 1416 can include the service gateway 1436 and the NAT gateway 1438.

The data plane VCN 1418 can include a data plane app tier 1446 (e.g. the data plane app tier 1246 of FIG. 12), a data plane DMZ tier 1448 (e.g. the data plane DMZ tier 1248 of FIG. 12), and a data plane data tier 1450 (e.g. the data plane data tier 1250 of FIG. 12). The data plane DMZ tier 1448 can include LB subnet(s) 1422 that can be communicatively coupled to trusted app subnet(s) 1460 and untrusted app subnet(s) 1462 of the data plane app tier 1446 and the Internet gateway 1434 contained in the data plane VCN 1418. The trusted app subnet(s) 1460 can be communicatively coupled to the service gateway 1436 contained in the data plane VCN 1418, the NAT gateway 1438 contained in the data plane VCN 1418, and DB subnet(s) 1430 contained in the data plane data tier 1450. The untrusted app subnet(s) 1462 can be communicatively coupled to the service gateway 1436 contained in the data plane VCN 1418 and DB subnet(s) 1430 contained in the data plane data tier 1450. The data plane data tier 1450 can include DB subnet(s) 1430 that can be communicatively coupled to the service gateway 1436 contained in the data plane VCN 1418.

The untrusted app subnet(s) 1462 can include one or more primary VNICs 1464(1)-(N) that can be communicatively coupled to tenant virtual machines (VMs) 1466(1)-(N). Each tenant VM 1466(1)-(N) can be communicatively coupled to a respective app subnet 1467(1)-(N) that can be contained in respective container egress VCNs 1468(1)-(N) that can be contained in respective customer tenancies 1470(1)-(N). Respective secondary VNICs 1472(1)-(N) can facilitate communication between the untrusted app subnet(s) 1462 contained in the data plane VCN 1418 and the app subnet contained in the container egress VCNs 1468(1)-(N). Each container egress VCNs 1468(1)-(N) can include a NAT gateway 1438 that can be communicatively coupled to public Internet 1454 (e.g. public Internet 1254 of FIG. 12).

The Internet gateway 1434 contained in the control plane VCN 1416 and contained in the data plane VCN 1418 can be communicatively coupled to a metadata management service 1452 (e.g. the metadata management system 1252 of FIG. 12) that can be communicatively coupled to public Internet 1454. Public Internet 1454 can be communicatively coupled to the NAT gateway 1438 contained in the control plane VCN 1416 and contained in the data plane VCN 1418. The service gateway 1436 contained in the control plane VCN 1416 and contained in the data plane VCN 1418 can be communicatively couple to cloud services 1456.

In some embodiments, the data plane VCN 1418 can be integrated with customer tenancies 1470. This integration can be useful or desirable for customers of the IaaS provider in some cases such as a case that may desire support when executing code. The customer may provide code to run that may be destructive, may communicate with other customer resources, or may otherwise cause undesirable effects. In response to this, the IaaS provider may determine whether to run code given to the IaaS provider by the customer.

In some examples, the customer of the IaaS provider may grant temporary network access to the IaaS provider and request a function to be attached to the data plane tier app 1446. Code to run the function may be executed in the VMs 1466(1)-(N), and the code may not be configured to run anywhere else on the data plane VCN 1418. Each VM 1466(1)-(N) may be connected to one customer tenancy 1470. Respective containers 1471(1)-(N) contained in the VMs 1466(1)-(N) may be configured to run the code. In this case, there can be a dual isolation (e.g., the containers 1471(1)-(N) running code, where the containers 1471(1)-(N) may be contained in at least the VM 1466(1)-(N) that are contained in the untrusted app subnet(s) 1462), which may help prevent incorrect or otherwise undesirable code from damaging the network of the IaaS provider or from damaging a network of a different customer. The containers 1471(1)-(N) may be communicatively coupled to the customer tenancy 1470 and may be configured to transmit or receive data from the customer tenancy 1470. The containers 1471(1)-(N) may not be configured to transmit or receive data from any other entity in the data plane VCN 1418. Upon completion of running the code, the IaaS provider may kill or otherwise dispose of the containers 1471(1)-(N).

In some embodiments, the trusted app subnet(s) 1460 may run code that may be owned or operated by the IaaS provider. In this embodiment, the trusted app subnet(s) 1460 may be communicatively coupled to the DB subnet(s) 1430 and be configured to execute CRUD operations in the DB subnet(s) 1430. The untrusted app subnet(s) 1462 may be communicatively coupled to the DB subnet(s) 1430, but in this embodiment, the untrusted app subnet(s) may be configured to execute read operations in the DB subnet(s) 1430. The containers 1471(1)-(N) that can be contained in the VM 1466(1)-(N) of each customer and that may run code from the customer may not be communicatively coupled with the DB subnet(s) 1430.

In other embodiments, the control plane VCN 1416 and the data plane VCN 1418 may not be directly communicatively coupled. In this embodiment, there may be no direct communication between the control plane VCN 1416 and the data plane VCN 1418. However, communication can occur indirectly through at least one method. An LPG 1410 may be established by the IaaS provider that can facilitate communication between the control plane VCN 1416 and the data plane VCN 1418. In another example, the control plane VCN 1416 or the data plane VCN 1418 can make a call to cloud services 1456 via the service gateway 1436. For example, a call to cloud services 1456 from the control plane VCN 1416 can include a request for a service that can communicate with the data plane VCN 1418.

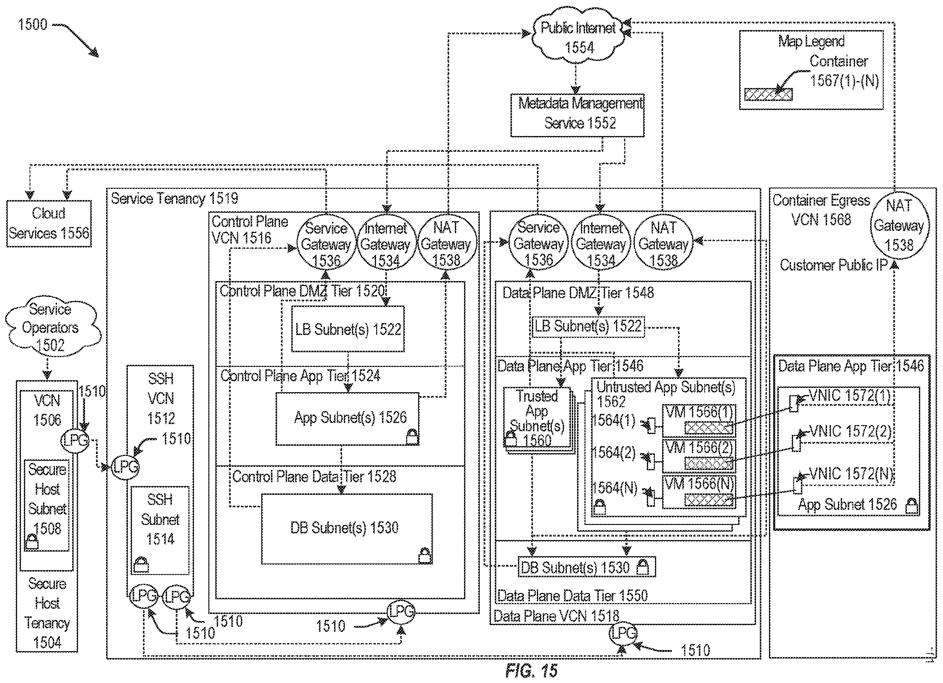

FIG. 15 is a block diagram 1500 illustrating another example pattern of an IaaS architecture, according to at least one embodiment. Service operators 1502 (e.g. service operators 1202 of FIG. 12) can be communicatively coupled to a secure host tenancy 1504 (e.g. the secure host tenancy 1204 of FIG. 12) that can include a virtual cloud network (VCN) 1506 (e.g. the VCN 1206 of FIG. 12) and a secure host subnet 1508 (e.g. the secure host subnet 1208 of FIG. 12). The VCN 1506 can include an LPG 1510 (e.g. the LPG 1210 of FIG. 12) that can be communicatively coupled to an SSH VCN 1512 (e.g. the SSH VCN 1212 of FIG. 12) via an LPG 1510 contained in the SSH VCN 1512. The SSH VCN 1512 can include an SSH subnet 1514 (e.g. the SSH subnet 1214 of FIG. 12), and the SSH VCN 1512 can be communicatively coupled to a control plane VCN 1516 (e.g. the control plane VCN 1216 of FIG. 12) via an LPG 1510 contained in the control plane VCN 1516 and to a data plane VCN 1518 (e.g. the data plane 1218 of FIG. 12) via an LPG 1510 contained in the data plane VCN 1518. The control plane VCN 1516 and the data plane VCN 1518 can be contained in a service tenancy 1519 (e.g. the service tenancy 1219 of FIG. 12).

The control plane VCN 1516 can include a control plane DMZ tier 1520 (e.g. the control plane DMZ tier 1220 of FIG. 12) that can include LB subnet(s) 1522 (e.g. LB subnet(s) 1222 of FIG. 12), a control plane app tier 1524 (e.g. the control plane app tier 1224 of FIG. 12) that can include app subnet(s) 1526 (e.g. app subnet(s) 1226 of FIG. 12), a control plane data tier 1528 (e.g. the control plane data tier 1228 of FIG. 12) that can include DB subnet(s) 1530 (e.g. DB subnet(s) 1430 of FIG. 14). The LB subnet(s) 1522 contained in the control plane DMZ tier 1520 can be communicatively coupled to the app subnet(s) 1526 contained in the control plane app tier 1524 and to an Internet gateway 1534 (e.g. the Internet gateway 1234 of FIG. 12) that can be contained in the control plane VCN 1516, and the app subnet(s) 1526 can be communicatively coupled to the DB subnet(s) 1530 contained in the control plane data tier 1528 and to a service gateway 1536 (e.g. the service gateway of FIG. 12) and a network address translation (NAT) gateway 1538 (e.g. the NAT gateway 1238 of FIG. 12). The control plane VCN 1516 can include the service gateway 1536 and the NAT gateway 1538.

The data plane VCN 1518 can include a data plane app tier 1546 (e.g. the data plane app tier 1246 of FIG. 12), a data plane DMZ tier 1548 (e.g. the data plane DMZ tier 1248 of FIG. 12), and a data plane data tier 1550 (e.g. the data plane data tier 1250 of FIG. 12). The data plane DMZ tier 1548 can include LB subnet(s) 1522 that can be communicatively coupled to trusted app subnet(s) 1560 (e.g. trusted app subnet(s) 1460 of FIG. 14) and untrusted app subnet(s) 1562 (e.g. untrusted app subnet(s) 1462 of FIG. 14) of the data plane app tier 1546 and the Internet gateway 1534 contained in the data plane VCN 1518. The trusted app subnet(s) 1560 can be communicatively coupled to the service gateway 1536 contained in the data plane VCN 1518, the NAT gateway 1538 contained in the data plane VCN 1518, and DB subnet(s) 1530 contained in the data plane data tier 1550. The untrusted app subnet(s) 1562 can be communicatively coupled to the service gateway 1536 contained in the data plane VCN 1518 and DB subnet(s) 1530 contained in the data plane data tier 1550. The data plane data tier 1550 can include DB subnet(s) 1530 that can be communicatively coupled to the service gateway 1536 contained in the data plane VCN 1518.

The untrusted app subnet(s) 1562 can include primary VNICs 1564(1)-(N) that can be communicatively coupled to tenant virtual machines (VMs) 1566(1)-(N) residing within the untrusted app subnet(s) 1562. Each tenant VM 1566(1)-(N) can run code in a respective container 1567(1)-(N), and be communicatively coupled to an app subnet 1526 that can be contained in a data plane app tier 1546 that can be contained in a container egress VCN 1568. Respective secondary VNICs 1572(1)-(N) can facilitate communication between the untrusted app subnet(s) 1562 contained in the data plane VCN 1518 and the app subnet contained in the container egress VCN 1568. The container egress VCN can include a NAT gateway 1538 that can be communicatively coupled to public Internet 1554 (e.g. public Internet 1254 of FIG. 12).

The Internet gateway 1534 contained in the control plane VCN 1516 and contained in the data plane VCN 1518 can be communicatively coupled to a metadata management service 1552 (e.g. the metadata management system 1252 of FIG. 12) that can be communicatively coupled to public Internet 1554. Public Internet 1554 can be communicatively coupled to the NAT gateway 1538 contained in the control plane VCN 1516 and contained in the data plane VCN 1518. The service gateway 1536 contained in the control plane VCN 1516 and contained in the data plane VCN 1518 can be communicatively couple to cloud services 1556.

In some examples, the pattern illustrated by the architecture of block diagram 1500 of FIG. 15 may be considered an exception to the pattern illustrated by the architecture of block diagram 1400 of FIG. 14 and may be desirable for a customer of the IaaS provider if the IaaS provider cannot directly communicate with the customer (e.g., a disconnected region). The respective containers 1567(1)-(N) that are contained in the VMs 1566(1)-(N) for each customer can be accessed in real-time by the customer. The containers 1567(1)-(N) may be configured to make calls to respective secondary VNICs 1572(1)-(N) contained in app subnet(s) 1526 of the data plane app tier 1546 that can be contained in the container egress VCN 1568. The secondary VNICs 1572(1)-(N) can transmit the calls to the NAT gateway 1538 that may transmit the calls to public Internet 1554. In this example, the containers 1567(1)-(N) that can be accessed in real-time by the customer can be isolated from the control plane VCN 1516 and can be isolated from other entities contained in the data plane VCN 1518. The containers 1567(1)-(N) may also be isolated from resources from other customers.

In other examples, the customer can use the containers 1567(1)-(N) to call cloud services 1556. In this example, the customer may run code in the containers 1567(1)-(N) that requests a service from cloud services 1556. The containers 1567(1)-(N) can transmit this request to the secondary VNICs 1572(1)-(N) that can transmit the request to the NAT gateway that can transmit the request to public Internet 1554. Public Internet 1554 can transmit the request to LB subnet(s) 1522 contained in the control plane VCN 1516 via the Internet gateway 1534. In response to determining the request is valid, the LB subnet(s) can transmit the request to app subnet(s) 1526 that can transmit the request to cloud services 1556 via the service gateway 1536.

It should be appreciated that IaaS architectures 1200, 1300, 1400, 1500 depicted in the figures may have other components than those depicted. Further, the embodiments shown in the figures are only some examples of a cloud infrastructure system that may incorporate an embodiment of the disclosure. In some other embodiments, the IaaS systems may have more or fewer components than shown in the figures, may combine two or more components, or may have a different configuration or arrangement of components.

In certain embodiments, the IaaS systems described herein may include a suite of applications, middleware, and database service offerings that are delivered to a customer in a self-service, subscription-based, elastically scalable, reliable, highly available, and secure manner. An example of such an IaaS system is the Oracle Cloud Infrastructure (OCI) provided by the present assignee.

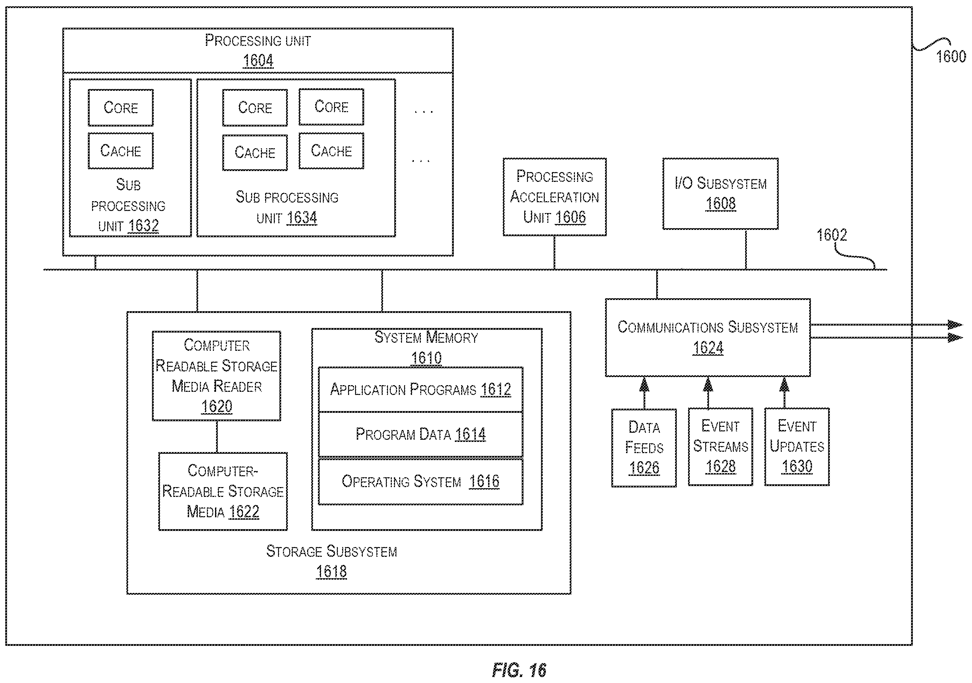

FIG. 16 illustrates an example computer system 1600, in which various embodiments may be implemented. The system 1600 may be used to implement any of the computer systems described above. As shown in the figure, computer system 1600 includes a processing unit 1604 that communicates with a number of peripheral subsystems via a bus subsystem 1602. These peripheral subsystems may include a processing acceleration unit 1606, an I/O subsystem 1608, a storage subsystem 1618 and a communications subsystem 1624. Storage subsystem 1618 includes tangible computer-readable storage media 1622 and a system memory 1610.

Bus subsystem 1602 provides a mechanism for letting the various components and subsystems of computer system 1600 communicate with each other as intended. Although bus subsystem 1602 is shown schematically as a single bus, alternative embodiments of the bus subsystem may utilize multiple buses. Bus subsystem 1602 may be any of several types of bus structures including a memory bus or memory controller, a peripheral bus, and a local bus using any of a variety of bus architectures. For example, such architectures may include an Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus, which can be implemented as a Mezzanine bus manufactured to the IEEE P1386.1 standard.

Processing unit 1604, which can be implemented as one or more integrated circuits (e.g., a conventional microprocessor or microcontroller), controls the operation of computer system 1600. One or more processors may be included in processing unit 1604. These processors may include single core or multicore processors. In certain embodiments, processing unit 1604 may be implemented as one or more independent processing units 1632 and/or 1634 with single or multicore processors included in each processing unit. In other embodiments, processing unit 1604 may also be implemented as a quad-core processing unit formed by integrating two dual-core processors into a single chip.

In various embodiments, processing unit 1604 can execute a variety of programs in response to program code and can maintain multiple concurrently executing programs or processes. At any given time, some or all of the program code to be executed can be resident in processor(s) 1604 and/or in storage subsystem 1618. Through suitable programming, processor(s) 1604 can provide various functionalities described above. Computer system 1600 may additionally include a processing acceleration unit 1606, which can include a digital signal processor (DSP), a special-purpose processor, and/or the like.

I/O subsystem 1608 may include user interface input devices and user interface output devices. User interface input devices may include a keyboard, pointing devices such as a mouse or trackball, a touchpad or touch screen incorporated into a display, a scroll wheel, a click wheel, a dial, a button, a switch, a keypad, audio input devices with voice command recognition systems, microphones, and other types of input devices. User interface input devices may include, for example, motion sensing and/or gesture recognition devices such as the Microsoft Kinect^{®} motion sensor that enables users to control and interact with an input device, such as the Microsoft Xbox^{®} 360 game controller, through a natural user interface using gestures and spoken commands. User interface input devices may also include eye gesture recognition devices such as the Google Glass^{®} blink detector that detects eye activity (e.g., 'blinking' while taking pictures and/or making a menu selection) from users and transforms the eye gestures as input into an input device (e.g., Google Glass^{®}). Additionally, user interface input devices may include voice recognition sensing devices that enable users to interact with voice recognition systems (e.g., Siri^{®} navigator), through voice commands.

User interface input devices may also include, without limitation, three dimensional (3D) mice, joysticks or pointing sticks, gamepads and graphic tablets, and audio/visual devices such as speakers, digital cameras, digital camcorders, portable media players, webcams, image scanners, fingerprint scanners, barcode reader 3D scanners, 3D printers, laser rangefinders, and eye gaze tracking devices. Additionally, user interface input devices may include, for example, medical imaging input devices such as computed tomography, magnetic resonance imaging, position emission tomography, medical ultrasonography devices. User interface input devices may also include, for example, audio input devices such as MIDI keyboards, digital musical instruments and the like.

User interface output devices may include a display subsystem, indicator lights, or non-visual displays such as audio output devices, etc. The display subsystem may be a cathode ray tube (CRT), a flat-panel device, such as that using a liquid crystal display (LCD) or plasma display, a projection device, a touch screen, and the like. In general, use of the term "output device" is intended to include all possible types of devices and mechanisms for outputting information from computer system 1600 to a user or other computer. For example, user interface output devices may include, without limitation, a variety of display devices that visually convey text, graphics and audio/video information such as monitors, printers, speakers, headphones, automotive navigation systems, plotters, voice output devices, and modems.

Computer system 1600 may comprise a storage subsystem 1618 that comprises software elements, shown as being currently located within a system memory 1610. System memory 1610 may store program instructions that are loadable and executable on processing unit 1604, as well as data generated during the execution of these programs.

Depending on the configuration and type of computer system 1600, system memory 1610 may be volatile (such as random access memory (RAM)) and/or non-volatile (such as read-only memory (ROM), flash memory, etc.) The RAM typically contains data and/or program modules that are immediately accessible to and/or presently being operated and executed by processing unit 1604. In some implementations, system memory 1610 may include multiple different types of memory, such as static random access memory (SRAM) or dynamic random access memory (DRAM). In some implementations, a basic input/output system (BIOS), containing the basic routines that help to transfer information between elements within computer system 1600, such as during start-up, may typically be stored in the ROM. By way of example, and not limitation, system memory 1610 also illustrates application programs 1612, which may include client applications, Web browsers, mid-tier applications, relational database management systems (RDBMS), etc., program data 1614, and an operating system 1616. By way of example, operating system 1616 may include various versions of Microsoft Windows^{®}, Apple Macintosh^{®}, and/or Linux operating systems, a variety of commercially-available UNIX^{®} or UNIX-like operating systems (including without limitation the variety of GNU/Linux operating systems, the Google Chrome^{®} OS, and the like) and/or mobile operating systems such as iOS, Windows^{®} Phone, Android^{®} OS, BlackBerry^{®} 16 OS, and Palm^{®} OS operating systems.

Storage subsystem 1618 may also provide a tangible computer-readable storage medium for storing the basic programming and data constructs that provide the functionality of some embodiments. Software (programs, code modules, instructions) that when executed by a processor provide the functionality described above may be stored in storage subsystem 1618. These software modules or instructions may be executed by processing unit 1604. Storage subsystem 1618 may also provide a repository for storing data used in accordance with the present disclosure.

Storage subsystem 1600 may also include a computer-readable storage media reader 1620 that can further be connected to computer-readable storage media 1622. Together and, optionally, in combination with system memory 1610, computer-readable storage media 1622 may comprehensively represent remote, local, fixed, and/or removable storage devices plus storage media for temporarily and/or more permanently containing, storing, transmitting, and retrieving computer-readable information.

Computer-readable storage media 1622 containing code, or portions of code, can also include any appropriate media known or used in the art, including storage media and communication media, such as but not limited to, volatile and non-volatile, removable and non-removable media implemented in any method or technology for storage and/or transmission of information. This can include tangible computer-readable storage media such as RAM, ROM, electronically erasable programmable ROM (EEPROM), flash memory or other memory technology, CD-ROM, digital versatile disk (DVD), or other optical storage, magnetic cassettes, magnetic tape, magnetic disk storage or other magnetic storage devices, or other tangible computer readable media. This can also include nontangible computer-readable media, such as data signals, data transmissions, or any other medium which can be used to transmit the desired information and which can be accessed by computing system 1600.

By way of example, computer-readable storage media 1622 may include a hard disk drive that reads from or writes to non-removable, nonvolatile magnetic media, a magnetic disk drive that reads from or writes to a removable, nonvolatile magnetic disk, and an optical disk drive that reads from or writes to a removable, nonvolatile optical disk such as a CD ROM, DVD, and Blu-Ray^{®} disk, or other optical media. Computer-readable storage media 1622 may include, but is not limited to, Zip^{®} drives, flash memory cards, universal serial bus (USB) flash drives, secure digital (SD) cards, DVD disks, digital video tape, and the like. Computer-readable storage media 1622 may also include, solid-state drives (SSD) based on non-volatile memory such as flash-memory based SSDs, enterprise flash drives, solid state ROM, and the like, SSDs based on volatile memory such as solid state RAM, dynamic RAM, static RAM, DRAM-based SSDs, magnetoresistive RAM (MRAM) SSDs, and hybrid SSDs that use a combination of DRAM and flash memory based SSDs. The disk drives and their associated computer-readable media may provide non-volatile storage of computer-readable instructions, data structures, program modules, and other data for computer system 1600.

Communications subsystem 1624 provides an interface to other computer systems and networks. Communications subsystem 1624 serves as an interface for receiving data from and transmitting data to other systems from computer system 1600. For example, communications subsystem 1624 may enable computer system 1600 to connect to one or more devices via the Internet. In some embodiments communications subsystem 1624 can include radio frequency (RF) transceiver components for accessing wireless voice and/or data networks (e.g., using cellular telephone technology, advanced data network technology, such as 3G, 4G or EDGE (enhanced data rates for global evolution), WiFi (IEEE 802.11 family standards, or other mobile communication technologies, or any combination thereof), global positioning system (GPS) receiver components, and/or other components. In some embodiments communications subsystem 1624 can provide wired network connectivity (e.g., Ethernet) in addition to or instead of a wireless interface.

In some embodiments, communications subsystem 1624 may also receive input communication in the form of structured and/or unstructured data feeds 1626, event streams 1628, event updates 1630, and the like on behalf of one or more users who may use computer system 1600.

By way of example, communications subsystem 1624 may be configured to receive data feeds 1626 in real-time from users of social networks and/or other communication services such as Twitter^{®} feeds, Facebook^{®} updates, web feeds such as Rich Site Summary (RSS) feeds, and/or real-time updates from one or more third party information sources.

Additionally, communications subsystem 1624 may also be configured to receive data in the form of continuous data streams, which may include event streams 1628 of real-time events and/or event updates 1630 that may be continuous or unbounded in nature with no explicit end. Examples of applications that generate continuous data may include, for example, sensor data applications, financial tickers, network performance measuring tools (e.g. network monitoring and traffic management applications), clickstream analysis tools, automobile traffic monitoring, and the like.

Communications subsystem 1624 may also be configured to output the structured and/or unstructured data feeds 1626, event streams 1628, event updates 1630, and the like to one or more databases that may be in communication with one or more streaming data source computers coupled to computer system 1600.

Computer system 1600 can be one of various types, including a handheld portable device (e.g., an iPhone^{®} cellular phone, an iPad^{®} computing tablet, a PDA), a wearable device (e.g., a Google Glass^{®} head mounted display), a PC, a workstation, a mainframe, a kiosk, a server rack, or any other data processing system.

Due to the ever-changing nature of computers and networks, the description of computer system 1600 depicted in the figure is intended only as a specific example. Many other configurations having more or fewer components than the system depicted in the figure are possible. For example, customized hardware might also be used and/or particular elements might be implemented in hardware, firmware, software (including applets), or a combination. Further, connection to other computing devices, such as network input/output devices, may be employed. Based on the disclosure and teachings provided herein, a person of ordinary skill in the art will appreciate other ways and/or methods to implement the various embodiments.

Further, while embodiments have been described using a particular combination of hardware and software, it should be recognized that other combinations of hardware and software are also within the scope of the present disclosure. Embodiments may be implemented only in hardware, or only in software, or using combinations thereof. The various processes described herein can be implemented on the same processor or different processors in any combination. Accordingly, where components or modules are described as being configured to perform certain operations, such configuration can be accomplished, e.g., by designing electronic circuits to perform the operation, by programming programmable electronic circuits (such as microprocessors) to perform the operation, or any combination thereof. Processes can communicate using a variety of techniques including but not limited to conventional techniques for inter process communication, and different pairs of processes may use different techniques, or the same pair of processes may use different techniques at different times.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments and does not pose a limitation on the scope of the disclosure unless otherwise claimed. No language in the specification should be construed as indicating any non-claimed element as essential to the practice of the disclosure.

Disjunctive language such as the phrase "at least one of X, Y, or Z," unless specifically stated otherwise, is intended to be understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

## Claims

1. A method (800) comprising:
for (810) a communication channel having a first endpoint in a customer on-premise network and a second endpoint on a primary host machine in a cloud service provider infrastructure, determining (830), by the primary host machine, a change in a state information of the communication channel;
identifying (840), by the primary host machine, a backup host machine for the communication channel; and
replicating (850), by the primary host machine, the change in the state information to the backup host machine, wherein the replicated state information stored by the backup host machine is usable by the backup host machine after a failover causes the backup host machine to become the second endpoint of the communication channel;
wherein replicating the change in the state information of the communication channel to the backup host machine comprises:
determining (1020), by the primary host machine, whether the replication of the change in the state information is to be performed in a safe mode, wherein the change in the state information is identified by analyzing a packet received at the primary host machine over the communication channel;
upon determining that the replication of the change in the state information is to be performed within the safe mode:
suspending (1030), by the primary host machine, processing of the packet;
communicating (1045), by the primary host machine, the change in the state information to the backup host machine, wherein the backup host machine is a successor host machine of the primary host machine within a replication chain;
receiving (1050), by the primary host machine, an acknowledgement indicating that the backup host machine has replicated the state information; and
responsive to receiving the acknowledgment, resuming (1055), by the primary host machine, processing of the packet; and
wherein the step of determining that the replication of the change in the state information is to be performed in the safe mode further comprises:
determining, by the primary host machine, that a downtime for the primary host machine is scheduled within a threshold time-interval after determining a change in the state information.

2. The method of claim 1, further comprising:
upon determining that the replication of the change in the state information is not to be performed in the safe mode:
communicating (1045), by the primary host machine, the change in the state information to the backup host machine; and
processing the packet by the primary host machine.

3. The method of claim 1, wherein the state information of the communication channel comprises at least one of a sequence number, cryptographic state information, Internet Key Exchange, IKE, state information, and Border Gateway Protocol, BGP, state information.

4. The method of claim 1, wherein determining the change in the state information of the communication channel further comprises:
detecting (820), by the primary host machine, an event triggering the change in the state information of the communication channel; and
analyzing, by the primary host machine, a packet associated with the event to determine the change in the state information.

5. The method of claim 4, wherein the event triggering the change in the state information is at least one of:
receiving a packet at the primary host machine;
receiving a change in encryption or decryption information for a connection for the communication channel; and
receiving a change in Border Gateway Protocol, BGP, state information for the connection.

6. The method of claim 1, wherein identifying the backup host machine for the communication channel further comprises:
querying, by the primary host machine, a disk-backed storage server to identify (1035) the replication chain for the communication channel; and
determining (1040), by the primary host machine, the backup host machine for the communication channel within the replication chain, wherein the primary host machine is a head of the replication chain and the backup host machine is a successor host machine of the primary host machine in the replication chain.

7. The method of claim 1, wherein analyzing a packet received at the primary host machine further comprises:
hashing, by the primary host machine, a portion of the packet to generate a hash result; and
identifying, by the primary host machine, the state information of the communication channel based on the hash result.

8. The method of claim 1, wherein the communication channel is an Internet Protocol Security IPSec, tunnel.

9. A non-transitory computer-readable storage medium, storing computer-executable instructions that, when executed by a primary host machine, causes the primary host machine to perform a method according to any one of claims 1 to 8.

## Patentansprüche

1. Verfahren (800), das umfasst:
für (810) einen Kommunikationskanal mit einem ersten Endpunkt in einem kundeneigenen Netzwerk und einem zweiten Endpunkt auf einer primären Host-Maschine in einer Cloud-Service-Provider-Infrastruktur, Bestimmen (830), durch die primäre Host-Maschine, einer Änderung in Zustandsinformationen des Kommunikationskanals;
Identifizieren (840), durch die primäre Host-Maschine, einer Backup-Host-Maschine für den Kommunikationskanal; und
Replizieren (850), durch die primäre Host-Maschine, der Änderung in den Zustandsinformationen zu der Backup-Host-Maschine, wobei die replizierten Zustandsinformationen, die von der Backup-Host-Maschine gespeichert werden, von der Backup-Host-Maschine verwendbar sind, nachdem ein Failover bewirkt, dass die Backup-Host-Maschine der zweite Endpunkt des Kommunikationskanals wird; wobei das Replizieren der Änderung in den Zustandsinformationen des Kommunikationskanals zu der Backup-Host-Maschine umfasst:
Bestimmen (1020), durch die primäre Host-Maschine, ob die Replikation der Änderung der Zustandsinformationen in einem sicheren Modus durchgeführt werden soll, wobei die Änderung in den Zustandsinformationen durch Analysieren eines Pakets identifiziert wird, das an der primären Host-Maschine über den Kommunikationskanal empfangen wird;
wenn festgestellt wird, dass die Replikation der Änderung der Zustandsinformationen in dem sicheren Modus durchgeführt werden soll:
Unterbrechen (1030), durch die primäre Host-Maschine, der Verarbeitung des Pakets;
Übermitteln (1045), durch die primäre Host-Maschine, der Änderung der Zustandsinformationen an die Backup-Host-Maschine, wobei die Backup-Host-Maschine eine Nachfolger-Host-Maschine der primären Host-Maschine innerhalb einer Replikationskette ist;
Empfangen (1050), durch die primäre Host-Maschine, einer Bestätigung, die anzeigt, dass die Backup-Host-Maschine die Zustandsinformationen repliziert hat; und
als Reaktion auf den Empfang der Bestätigung, Wiederaufnehmen (1055) der Verarbeitung des Pakets durch die primäre Host-Maschine; und
wobei der Schritt des Bestimmens, dass die Replikation der Änderung der Zustandsinformationen in dem sicheren Modus durchgeführt werden soll, ferner umfasst:
Bestimmen, durch die primäre Host-Maschine, dass eine Ausfallzeit für die primäre Host-Maschine innerhalb eines Schwellenzeitintervalls nach dem Bestimmen einer Änderung in den Zustandsinformationen geplant ist.

2. Verfahren nach Anspruch 1, das ferner umfasst:
wenn festgestellt wird, dass die Replikation der Änderung der Zustandsinformationen nicht in dem sicheren Modus durchgeführt werden soll:
Übermitteln (1045), durch die primäre Host-Maschine, der Änderung in den Zustandsinformationen zu der Backup-Host-Maschine, und
Verarbeiten des Pakets durch die primäre Host-Maschine.

3. Verfahren nach Anspruch 1, wobei die Zustandsinformationen des Kommunikationskanals mindestens eine Sequenznummer, kryptographische Zustandsinformationen, Internet Key Exchange- (IKE) Zustandsinformationen oder Border Gateway Protocol- (BGP) Zustandsinformationen umfasst.

4. Verfahren nach Anspruch 1, wobei das Bestimmen der Änderung in den Zustandsinformationen des Kommunikationskanals ferner umfasst:
Erfassen (820), durch die primäre Host-Maschine, eines Ereignisses, das die Änderung der Zustandsinformationen des Kommunikationskanals auslöst; und
Analysieren, durch die primäre Host-Maschine, eines dem Ereignis zugeordneten Pakets, um die Änderung der Zustandsinformationen zu bestimmen.

5. Verfahren nach Anspruch 4, wobei das Ereignis, das die Änderung der Zustandsinformationen auslöst, mindestens eines der Folgenden ist::
Empfangen eines Pakets an der primären Host-Maschine;
Empfangen einer Änderung der Verschlüsselungs- oder Entschlüsselungsinformationen für eine Verbindung für den Kommunikationskanal; und
Empfangen einer Änderung der Border Gateway Protocol-, BGP, Statusinformationen für die Verbindung.

6. Verfahren nach Anspruch 1, wobei das Identifizieren der Backup-Host-Maschine für den Kommunikationskanal ferner umfasst:
Abfragen, durch die primäre Host-Maschine, eines plattengestützten Speicherservers, um die Replikationskette für den Kommunikationskanal zu identifizieren (1035); und
Bestimmen (1040), durch die primäre Host-Maschine, der Backup-Host-Maschine für den Kommunikationskanal innerhalb der Replikationskette, wobei die primäre Host-Maschine ein Kopf der Replikationskette ist und die Backup-Host-Maschine eine Nachfolger-Host-Maschine der primären Host-Maschine in der Replikationskette ist.

7. Verfahren nach Anspruch 1, wobei das Analysieren eines an der primären Host-Maschine empfangenen Pakets ferner umfasst:
Hashing, durch die primäre Host-Maschine, eines Teils des Pakets, um ein Hash-Ergebnis zu erzeugen; und
Identifizieren, durch die primäre Host-Maschine, der Zustandsinformationen des Kommunikationskanals basierend auf dem Hash-Ergebnis.

8. Verfahren nach Anspruch 1, wobei der Kommunikationskanal ein Internet Protocol Security-, IPSec, Tunnel ist.

9. Nicht-flüchtiges, computerlesbares Speichermedium, das computerausführbare Befehle speichert, die, wenn sie von einer primären Host-Maschine ausgeführt werden, die primäre Host-Maschine veranlassen, ein Verfahren nach einem der Ansprüche 1 bis 8 durchzuführen.

## Revendications

1. Procédé (800) comportant les étapes consistant à :
pour (810) un canal de communication ayant un premier point d'extrémité dans un réseau local client et un deuxième point d'extrémité sur une machine hôte primaire dans une infrastructure de fournisseur de services en nuage, déterminer (830), par la machine hôte primaire, un changement dans des informations d'état du canal de communication ;
identifier (840), par la machine hôte primaire, une machine hôte de sauvegarde pour le canal de communication ; et
reproduire (850), par la machine hôte primaire, le changement dans les informations d'état sur la machine hôte de sauvegarde, dans lequel les informations d'état reproduites stockées par la machine hôte de sauvegarde sont en mesure d'être utilisées par la machine hôte de sauvegarde après qu'un basculement amène la machine hôte de sauvegarde à devenir le deuxième point d'extrémité du canal de communication ;
dans lequel l'étape consistant à reproduire le changement dans les informations d'état du canal de communication sur la machine hôte de sauvegarde comporte les étapes consistant à :
déterminer (1020), par la machine hôte primaire, si la reproduction du changement dans les informations d'état doit être effectuée en mode sans échec, dans lequel le changement dans les informations d'état est identifié par l'analyse d'un paquet reçu au niveau de la machine hôte primaire par le biais du canal de communication ;
après avoir déterminé que la reproduction du changement dans les informations d'état doit être effectuée en mode sans échec :
suspendre (1030), par la machine hôte primaire, le traitement du paquet ;
communiquer (1045), par la machine hôte primaire, le changement dans les informations d'état à la machine hôte de sauvegarde, dans lequel la machine hôte de sauvegarde est une machine hôte successeur de la machine hôte primaire dans une chaîne de reproduction ;
recevoir (1050), par la machine hôte primaire, un accusé de réception indiquant que la machine hôte de sauvegarde a reproduit les informations d'état ; et
en réponse à la réception de l'accusé de réception, reprendre (1055), par la machine hôte primaire, le traitement du paquet ; et
dans lequel l'étape consistant à déterminer que la reproduction du changement dans les informations d'état doit être effectuée en mode sans échec comporte par ailleurs l'étape consistant à :
déterminer, par la machine hôte primaire, qu'un temps d'arrêt pour la machine hôte primaire est planifié dans les limites d'un intervalle de temps seuil après avoir déterminé un changement dans les informations d'état.

2. Procédé selon la revendication 1, comportant par ailleurs les étapes consistant à :
après avoir déterminé que la reproduction du changement des informations d'état ne doit pas être effectuée en mode sans échec :
communiquer (1045), par la machine hôte primaire, le changement des informations d'état à la machine hôte de sauvegarde ; et
traiter le paquet par la machine hôte primaire.

3. Procédé selon la revendication 1, dans lequel les informations d'état du canal de communication comportent au moins l'un parmi un numéro de séquence, des informations d'état cryptographiques, des informations d'état IKE (Internet Key Exchange - échange de clés Internet) et des informations d'état BGP (Border Gateway Protocol - protocole de passerelle frontière).

4. Procédé selon la revendication 1, dans lequel l'étape consistant à déterminer le changement dans les informations d'état du canal de communication comporte par ailleurs les étapes consistant à :
détecter (820), par la machine hôte primaire, un événement déclenchant le changement dans les informations d'état du canal de communication ; et
analyser, par la machine hôte primaire, un paquet associé à l'événement afin de déterminer le changement dans les informations d'état.

5. Procédé selon la revendication 4, dans lequel l'événement déclenchant le changement dans les informations d'état est au moins l'une parmi les actions suivantes :
la réception d'un paquet sur la machine hôte primaire ;
la réception d'un changement dans les informations de chiffrement ou de déchiffrement pour une connexion pour le canal de communication ; et
la réception d'un changement dans les informations d'état BGP (Border Gateway Protocol - protocole de passerelle frontière) pour la connexion.

6. Procédé selon la revendication 1, dans lequel l'étape consistant à identifier la machine hôte de sauvegarde pour le canal de communication comporte par ailleurs les étapes consistant à :
interroger, par la machine hôte primaire, un serveur de stockage sauvegardé sur disque pour identifier (1035) la chaîne de reproduction pour le canal de communication ; et
déterminer (1040), par la machine hôte primaire, la machine hôte de sauvegarde pour le canal de communication dans la chaîne de reproduction, dans lequel la machine hôte primaire est une tête de la chaîne de reproduction et la machine hôte de sauvegarde est une machine hôte successeur de la machine hôte primaire dans la chaîne de reproduction.

7. Procédé selon la revendication 1, dans lequel l'étape consistant à analyser un paquet reçu dans la machine hôte primaire comporte par ailleurs les étapes consistant à :
hacher, par la machine hôte primaire, une partie du paquet pour générer un résultat de hachage ; et
identifier, par la machine hôte primaire, les informations d'état du canal de communication sur la base du résultat du hachage.

8. Procédé selon la revendication 1, dans lequel le canal de communication est un tunnel IPSec (Internet Protocol Security - protocole de sécurité pour IP).

9. Support de stockage non transitoire lisible par ordinateur, stockant des instructions en mesure d'être exécutées par ordinateur qui, quand elles sont exécutées par une machine hôte primaire, amènent la machine hôte primaire à effectuer un procédé selon l'une quelconque des revendications 1 à 8.
